(19) Europäisches Patentamt
European Patent Office
Office européen des brevets

(11) EP 0 663 412 B1

(12) **FASCICULE DE BREVET EUROPEEN**

(45) Date de publication et mention de la délivrance du brevet: **02.09.1998 Bulletin 1998/36**

(51) Int Cl.[6]: **C08G 18/08**, C09D 133/14, C09D 157/10

(21) Numéro de dépôt: **94870198.2**

(22) Date de dépôt: **20.12.1994**

(54) **Compositions aqueuses de polyuréthanes**

Wässrige Polyurethanzusammensetzungen

Agueous polyurethane compositions

(84) Etats contractants désignés:
**AT BE CH DE DK ES FR GB GR IE IT LI LU MC NL PT SE**
Etats d'extension désignés:
**LT SI**

(30) Priorité: **14.01.1994 GB 9400663**

(43) Date de publication de la demande:
**19.07.1995 Bulletin 1995/29**

(73) Titulaire: **U C B, S.A.**
**1070 Bruxelles (BE)**

(72) Inventeurs:
- **Bontinck, Dirk**
  **B-9940 Evergem (BE)**
- **Tielemans, Michel**
  **B-1780 Wemmel (BE)**
- **Loutz, Jean-Marie**
  **B-1180 Bruxelles (BE)**
- **Vandersmissen, André**
  **B-1180 Bruxelles (BE)**
- **De Koninck, Luc**
  **B-1180 Bruxelles (BE)**

(74) Mandataire: **Debled, Thierry et al**
**UCB S.A.**
**Département D.T.B.**
**rue d'Anderlecht 33**
**1620 Drogenbos (BE)**

(56) Documents cités:
**EP-A- 0 372 804**
**EP-A- 0 457 276**
**EP-A- 0 552 469**
**EP-A- 0 568 134**
**CH-A- 471 881**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 663 412 B1

Printed by Jouve, 75001 PARIS (FR)

## Description

La présente invention se rapporte à de nouvelles compositions aqueuses de résines et plus particulièrement à de nouvelles compositions aqueuses de résines autoréticulables comprenant une dispersion aqueuse de polyuréthannes et de polymères vinyliques.

Dans le cadre de la présente invention, une "dispersion aqueuse" signifie une dispersion des polymères dans un milieu aqueux dont l'eau est le composant principal.

Des compositions aqueuses de résines comprenant une dispersion aqueuse de polyuréthannes sont bien connues pour la production de revêtements de surface sur divers substrats tels que le bois, le métal, les tissus, le cuir, le papier et les matières plastiques, pour la fabrication de liants pour encres d'imprimerie, d'adhésifs, etc. Ces compositions sont utiles par exemple pour la préparation de revêtements protecteurs parce que les dispersions de polyuréthannes peuvent être confectionnées sur mesure pour fournir des revêtements ayant des propriétés très désirables telles que facilité d'application, bonne adhérence, résistance chimique, résistance à l'abrasion, brillance, solidité et excellente élasticité et durabilité.

En outre, les compositions aqueuses de polyuréthannes pour revêtements sont particulièrement avantageuses parce qu'en raison de l'absence ou de la faible teneur en solvants organiques, ces compositions aqueuses n'ont pas d'effets toxiques ou malodorants nuisibles pour l'environnement. C'est pourquoi, les dispersions aqueuses de polyuréthannes deviennent de plus en plus importantes. Cependant, leur faible résistance aux solvants et à l'eau sont de sérieux désavantages des dispersions aqueuses de polyuréthannes.

Dans le but d'améliorer les propriétés de résistance aux solvants et à l'eau et d'autres propriétés physiques, telles que l'adhérence aux substrats des revêtements formés à partir des dispersions aqueuses de polyuréthannes, il a déjà été proposé d'ajouter divers agents de réticulation à ces dispersions. Par exemple, les brevets américains 4.301.053 et 5.137.967 décrivent des compositions aqueuses comprenant un polyuréthanne contenant des groupes carboxyle et un dérivé d'aziridine trifonctionnel ou une résine mélamine-formaldéhyde pour obtenir la réticulation. Dans le brevet américain 4.598.121, il a également été proposé de procurer des dispersions aqueuses de polyuréthannes autoréticulables à basse température en incorporant des groupes hydrazide dans la chaîne du polyuréthanne et en ajoutant du formaldéhyde. Cependant, la stabilité au stockage d'une composition contenant un agent de réticulation dans une dispersion de polyuréthannes est limitée à un ou deux jours à la température ambiante. Cela signifie que l'utilisateur final doit ajouter l'agent de réticulation juste avant l'application de la dispersion. D'autre part, l'utilisation d'agents de réticulation relativement toxiques tels que les dérivés d'aziridine ou le formaldéhyde est indésirable dans de nombreuses applications.

Il a aussi été proposé de modifier les propriétés des dispersions aqueuses de polyuréthannes en y incorporant des polymères vinyliques ou acryliques (dans la présente description, on entend par un polymère vinylique, un (co) polymère obtenu par polymérisation radicalaire d'au moins un monomère éthyléniquement insaturé). Les dispersions aqueuses de polymères acryliques pour revêtements sont bien connues pour leur excellente adhérence, leur durabilité, transparence et résistance aux intempéries, mais leurs propriétés filmogènes sont faibles et elles présentent une faible flexibilité mécanique. C'est pourquoi, des mélanges de dispersions aqueuses de polyuréthannes et de dispersions aqueuses de polymères vinyliques ou acryliques devraient fournir un bon compromis de propriétés à un prix compétitif.

Plusieurs brevets décrivent des procédés dans lesquels le polymère vinylique est formé in situ par polymérisation d'un ou plusieurs monomères vinyliques en présence d'une dispersion aqueuse de polyuréthannes. Dans les procédés de ce type, comme décrits dans le brevet belge 757.936 et les brevets américains 4.198.330 et 4.318.833, les polyuréthannes doivent leur dispersibilité dans l'eau à la présence de groupes anioniques. La demande de brevet européen 510.572 décrit la polymérisation d'un monomère vinylique simultanément avec l'extension de chaîne du polyuréthanne. Toutefois, afin d'obtenir des performances optimales en termes de résistance chimique et de résistance à l'abrasion, une réticulation avec des agents de réticulation externes doit encore toujours être effectuée, parce que les mélanges ne sont pas autoréticulables en ce sens qu'il ne se produit pas une réaction chimique entre le polyuréthanne et le polymère vinylique.

Récemment, on a porté beaucoup d'attention au développement de dispersions aqueuses de copolymères greffés polyuréthanne-acryliques, à un composant et stables au stockage, à cause de leur compatibilité, leur résistance aux intempéries et leurs propriétés filmogènes. Par exemple, la demande de brevet européen 167.188 décrit un procédé dans lequel des dispersions de polymères uréthanne acrylés sont utilisées dans une polymérisation en émulsion avec d'autres monomères vinyliques pour obtenir une dispersion aqueuse stable de copolymères greffés d'uréthanne-acrylates. Cependant, dans ce cas également, afin d'obtenir des performances maximales, une réticulation avec des agents de réticulation externes doit encore être réalisée.

Le brevet américain 4.983.662 décrit des compositions aqueuses pour revêtements comprenant un polyuréthanne fonctionnalisé et un polymère vinylique fonctionnalisé qui sont autoréticulables à la température ambiante ou à basse température. Par exemple, un polyuréthanne portant des groupes fonctionnels hydrazine est réticulé avec un polymère vinylique portant des groupes fonctionnels carbonyle via la formation d'azométhine engendrée par la réaction d'un

dérivé de l'hydrazine avec un composé carbonylé cétonique ou aldéhydique. De plus, le brevet américain 5.288.804 décrit des compositions durcissables à température ambiante qui comprennent un polymère, tel qu'un polyuréthanne ou un polymère vinylique, portant des groupes fonctionnels acétoacétate, ou un mélange de ces polymères et, en tant qu'agent de réticulation, une aldimine aromatique qui réagira avec un groupe acétoacétate. Cependant, le procédé de préparation des polyuréthannes ayant des groupes fonctionnels hydrazine ou acétoacétate pendant le long de la chaîne nécessite plusieurs étapes supplémentaires par rapport à la préparation des polyuréthannes conventionnels dispersibles dans l'eau et dissuade l'homme du métier d'utiliser un tel procédé. De plus, aucune donnée n'est fournie dans ces brevets montrant que les compositions finales sont stables à l'entreposage.

De ce qui précède il ressort qu'il existe encore un besoin de compositions aqueuses de polyuréthannes comprenant des polyuréthannes et des polymères vinyliques, qui sont autoréticulables à la température ambiante ou à basse température, c'est-à-dire, sans l'addition d'agents de réticulation externes ou de catalyseurs, qui possèdent une excellente stabilité au stockage, qui ont une large gamme de propriétés de manière à permettre la production de revêtements et d'adhésifs dont la qualité est au moins égale à celle des compositions aqueuses de polyuréthannes durcissables à basse température de l'état de la technique, et où, en même temps, les constituants de la composition et en particulier le polyuréthanne, peuvent être préparés par un procédé de production simple, impliquant des matières premières peu coûteuses et facilement disponibles sur le marché.

La demanderesse a trouvé maintenant une nouvelle catégorie très utile de compositions aqueuses de résines autoréticulables comprenant des polyuréthannes possédant comme seuls groupes fonctionnels pendant le long de la chaîne (c'est-à-dire latéralement) des groupes anioniques (qui sont normalement déjà présents pour assurer l'autodispersibilité du polyuréthanne dans l'eau) et des polymères vinyliques possédant des groupes fonctionnels ester d'acétoacétoxyalkyle pendant le long de la chaîne (c'est-à-dire latéralement); avec ces compositions, l'autoréticulation est effectuée à la température ambiante ou à des températures modérément élevées, pendant et/ou après la formation du film. En outre, ces compositions présentent une stabilité au stockage remarquablement élevée (à savoir, plus de 6 mois à la température ambiante) et ne renferment pas d'agents de réticulation externes coûteux et potentiellement toxiques.

La présente invention a donc pour objet une composition aqueuse de résines autoréticulables comprenant une dispersion aqueuse contenant au moins un polyuréthanne et au moins un polymère vinylique qui est caractérisée en ce que ledit au moins un polyuréthanne possède comme seuls groupes fonctionnels pendant le long de la chaîne des groupes anioniques et en ce que ledit au moins un polymère vinylique possède des groupes fonctionnels ester d'acétoacétoxyalkyle pendant le long de la chaîne.

Dans le cadre de la présente invention, un groupe fonctionnel pendant le long de la chaîne signifie tout groupe fonctionnel qui est attaché à un atome de carbone compris dans la chaîne du polymère et non les éventuels groupes présents aux extrémités de la chaîne du polymère.

On croit que la réaction d'autoréticulation suscitée par les compositions de la présente invention passe par la formation de liens esters entre l'acide des groupes anioniques du polyuréthanne et les groupes ester d'acétoacétoxyalkyle pendant le long de la chaîne du polymère vinylique (transestérification par acidolyse par fission acyl-oxygène; voir J.KOSKIKALLIO dans "The chemistry of carboxylic acids and esters", édité par S.PATAI, (1969), 126-131) selon les équations suivantes:

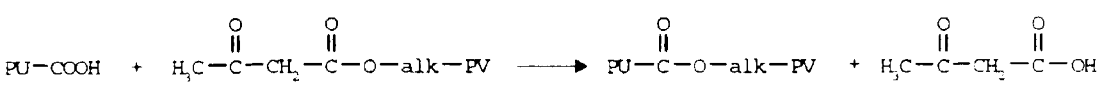

et

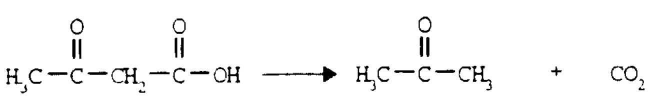

dans lesquelles PU représente une chaîne de polyuréthanne, PV une chaîne de polymère dérivée de monomères vinyliques, et alk représente un radical alkylène (quoique la demanderesse ne souhaite pas être assujettie à ce mécanisme hypothétique).

Cette réaction d'autoréticulation entre le polyuréthanne et le polymère vinylique se produira pendant et/ou après la formation du film (au départ de la phase aqueuse externe) lorsque la composition a été appliquée sur un substrat. Ceci résulte clairement en la formation d'un film de polymère ayant des propriétés inédites par rapport à celles des

composants polymères non fonctionnels et présentant même dans de nombreux cas un ensemble unique de caractéristiques physiques, optiques et mécaniques compatibles avec la présence d'un matériau nouveau. Ceci peut être déduit par exemple de la présence d'une seule température de transition vitreuse (Tg) et des valeurs exceptionnelles du taux de gel mesurées après durcissement du revêtement pendant trois jours à la température ambiante.

Les compositions aqueuses de résines autoréticulables de la présente invention contiennent le(s) polyuréthanne (s) et le(s) polymère(s) vinylique(s) dans un rapport en poids de 1:10 à 10:1, de préférence de 1:4 à 4:1.

Selon une forme de réalisation particulière de l'invention, le polymère vinylique peut être préparé par polymérisation des monomères en présence du polymère ou du prépolymère de polyuréthanne, ou encore, le polyuréthanne peut être préparé an présence du polymère vinylique (voir les exemples 35 et 36). Ce mode opératoire donne une teneur plus élevée en matières sèches des compositions.

## Polyuréthannes

Le composant polyuréthanne des compositions de la présente invention est un polyuréthanne dispersible dans l'eau possédant des groupes fonctionnels anioniques pendant le long de la chaîne, choisis dans le groupe consistant en les groupes -COOM et -$SO_3M$, de préférence le groupe - COOM, dans lesquels M représente un métal alcalin ou un groupe ammonium, tétraalkylammonium ou tétraalkylphosphonium.

Ces groupes anioniques sont présents dans le polyuréthanne en une quantité de 0,01 à 2 milliéquivalents par gramme de polyuréthanne.

Le polyuréthanne présent dans les compositions de la présente invention est de préférence le produit de réaction de

(1) un prépolymère de polyuréthanne terminé par des groupes isocyanate formé par la réaction d'au moins

(a) un excès d'un polyisocyanate organique;
(b) un composé organique contenant au moins deux groupes réagissant avec le groupe isocyanate; et
(c) un composé réagissant avec le groupe isocyanate contenant des groupes fonctionnels anioniques (ou des groupes acide qui peuvent ensuite être convertis en de tels groupes anioniques); et

(2) un agent d'extension de chaîne contenant des atomes d'hydrogène actifs.

Selon la présente invention, le polyisocyanate organique utilisé pour la préparation du prépolymère de polyuréthanne terminé par des groupes isocyanate peut être un polyisocyanate aliphatique, cycloaliphatique ou aromatique. Comme exemples de diisocyanates aliphatiques appropriés, on peut mentionner les 1,4-diisocyanatobutane, 1,6-diisocyanatohexane, 1,6-diisocyanato-2,2,4-triméthylhexane et 1,12-diisocyanatododécane, seuls ou en mélange. Les diisocyanates cycloaliphatiques particulièrement appropriés comprennent les 1,3- et 1,4-diisocyanatocyclohexane, 2,4-diisocyanato-1-méthylcyclohexane, 1,3-diisocyanato-2-méthylcyclohexane, 1-isocyanato-2-(isocyanatométhyl) cyclopentane, 1,1'-méthylènebis[4-isocyanatocyclohexane], 1,1'-(1-méthyléthylidène)bis[4-isocyanatocyclohexane], 5-isocyanato-1-isocyanatométhyl-1,3,3-triméthylcyclohexane (diisocyanate d'isophorone), 1,3- et 1,4-bis(isocyanatométhyl)cyclohexane, 1,1'-méthylènebis[4-isocyanato-3-méthylcyclohexane], 1-isocyanato-4-(ou 3)-isocyanatométhyl-1-méthylcyclohexane, seuls ou en mélange. Les diisocyanates aromatiques particulièrement appropriés comprennent les 1,4-diisocyanatobenzène, 1,1'-méthylènebis[4-isocyanatobenzène], 2,4-diisocyanato-1-méthylbenzène, 1,3-diisocyanato-2-méthylbenzène, 1,5-diisocyanatonaphtalène, 1,1'-(1-méthyléthylidène)bis[4-isocyanatobenzène], 1,3- et 1,4-bis(1-isocyanato-1-méthyléthyl)benzène, seuls ou en mélange. Des polyisocyanates aromatiques contenant 3 groupes isocyanate ou plus peuvent aussi être utilisés, comme le 1,1',1"-méthylidynetris[4-isocyanatobenzène] et les polyisocyanates de polyphényl polyméthylène obtenus par phosgénation de condensats aniline/formaldéhyde.

La quantité totale de polyisocyanate organique peut être de 10 à 60% en poids du polyuréthanne, de préférence de 20 à 50% en poids et plus préférablement encore, de 30 à 40% en poids.

Les composés organiques contenant au moins deux groupes réagissant avec le groupe isocyanate utilisés pour la préparation du prépolymère de polyuréthanne terminé par des groupes isocyanate peuvent être des polyesters polyols, des polyéthers polyols, des polycarbonates polyols, des polyacétals polyols, des polyesteramides polyols ou des polythioéthers polyols. Les polyesters polyols, les polyéthers polyols et les polycarbonates polyols sont préférés. Ces composés organiques contenant au moins deux groupes réagissant avec le groupe isocyanate ont de préférence un poids moléculaire moyen en nombre compris dans l'intervalle de 400 à 5.000.

Des polyesters polyols appropriés qui peuvent être utilisés comprennent les produits de réaction terminés par des groupes hydroxyle d'alcools polyhydriques, de préférence dihydriques (auxquels on peut ajouter des alcools trihydriques) avec des acides polycarboxyliques, de préférence dicarboxyliques, ou de leurs anhydrides d'acide carboxylique correspondants. Les polyesters polyols obtenus par polymérisation par ouverture de cycle de lactones, telles que l'ε-caprolactone, peuvent également être inclus.

Les acides polycarboxyliques qui peuvent être utilisés pour la formation de ces polyesters polyols peuvent être aliphatiques, cycloaliphatiques, aromatiques et/ou hétérocycliques et ils peuvent être substitués (par exemple par des atomes d'halogène) et être saturés ou insaturés. Comme exemples d'acides dicarboxyliques aliphatiques, on peut mentionner l'acide succinique, l'acide glutarique, l'acide adipique, l'acide subérique, l'acide azélaïque, l'acide sébacique et l'acide dodécanedicarboxylique. A titre d'exemple d'un acide dicarboxylique cycloaliphatique, on peut mentionner l'acide hexahydrophtalique. Des exemples d'acides dicarboxyliques aromatiques comprennent l'acide isophtalique, l'acide téréphtalique, l'acide ortho-phtalique, les acides tétrachlorophtaliques et l'acide 1,5-naphtalènedicarboxylique. Parmi les acides dicarboxyliques aliphatiques insaturés qui peuvent être utilisés, on peut mentionner l'acide fumarique, l'acide maléique, l'acide itaconique, l'acide citraconique, l'acide mésaconique et l'acide tétrahydrophtalique. Des exemples d'acides tri- et tétracarboxyliques comprennent l'acide trimellitique, l'acide trimésique et l'acide pyromellitique.

Les alcools polyhydriques qui peuvent être utilisés pour la préparation des polyesters polyols comprennent l'éthylène glycol, le propylène glycol, le 1,3-propanediol, le 1,3-butanediol, le 1,4-butanediol, le 1,5-pentanediol, le 1,6-hexanediol, le néopentyl glycol, le diéthylène glycol, le dipropylène glycol, le triéthylène glycol, le tétraéthylène glycol, le dibutylène glycol, le 2-méthyl-1,3-pentanediol, le 2,2,4-triméthyl-1,3-pentanediol, le 1,4-cyclohexanediméthanol, les adducts d'oxyde d'éthylène ou d'oxyde de propylène avec le bisphénol A ou le bisphénol A hydrogéné. Des triols ou des tétraols tels que le triméthyloléthane, le triméthylolpropane, le glycérol et le pentaérythritol peuvent également être utilisés. Ces alcools polyhydriques sont généralement utilisés pour préparer des polyesters polyols par polycondensation avec les acides polycarboxyliques mentionnés ci-dessus, mais, selon un mode de réalisation particulier, ils peuvent également être ajoutés en tant que tels au mélange réactionnel du prépolymère de polyuréthanne.

Des polyéthers polyols appropriés comprennent les polyéthylène glycols, les polypropylène glycols et les polytétraéthylène glycols.

Des polycarbonates polyols appropriés qui peuvent être utilisés comprennent les produits de réaction de diols, tels que le 1,3-propanediol, le 1,4-butanediol, le 1,6-hexanediol, le diéthylène glycol, le triéthylène glycol ou le tétraéthylène glycol avec le phosgène, avec des diarylcarbonates, tels que le diphénylcarbonate ou avec des carbonates cycliques tels que le carbonate d'éthylène et/ou de propylène.

Des polyacétals polyols appropriés qui peuvent être utilisés comprennent ceux qui sont préparés par réaction de glycols, tels que le diéthylène glycol, avec le formaldéhyde. Des polyacétals appropriés peuvent également être préparés par polymérisation d'acétals cycliques.

La quantité totale de ces composés organiques contenant au moins deux groupes réagissant avec le groupe isocyanate peut être de 30 à 90% en poids du polyuréthanne, de préférence, de 45 à 65% en poids.

Des composés réagissant avec le groupe isocyanate contenant des groupes fonctionnels anioniques (ou des groupes acide qui peuvent ensuite être convertis en de tels groupes anioniques) comprennent spécifiquement les composés contenant les groupes anioniques dispersants qui sont nécessaires pour assurer l'autodispersibilité dans l'eau du prépolymère de polyuréthanne, par exemple des groupes sulfonate ou carboxylate. Selon l'invention, ces composés sont de préférence utilisés comme réactifs pour la préparation du prépolymère de polyuréthanne terminé par des groupes isocyanate.

Les groupes sulfonate peuvent être introduits dans ce prépolymère en utilisant des polyesters sulfonés obtenus par la réaction d'acides dicarboxyliques sulfonés avec un ou plusieurs des alcools polyhydriques mentionnés ci-dessus, ou par la réaction de diols sulfonés avec un ou plusieurs des acides polycarboxyliques mentionnés ci-dessus. Des exemples appropriés d'acides dicarboxyliques sulfonés comprennent l'acide 5-(sodiosulfo)-isophtalique et les acides sulfoisophtaliques. Des exemples appropriés de diols sulfonés comprennent la sodiosulfohydroquinone et le 2-(sodiosulfo)-1,4-butanediol. Dans une variante de la méthode de préparation, les groupes sulfonate peuvent aussi être incorporés pendant l'extension des chaînes au moyen de diamines sulfonées telles que, par exemple, le sel sodique de l'acide 2,4-diamino-5-méthylbenzènesulfonique.

Les groupes carboxylate incorporés dans les prépolymères de polyuréthannes terminés par des groupes isocyanate sont dérivés d'acides hydroxycarboxyliques représentés par la formule générale $(HO)_xR(COOH)_y$, dans laquelle R représente un radical hydrocarboné à chaîne droite ou ramifiée possédant de 1 à 12 atomes de carbone, et x et y sont des nombres entiers de 1 à 3. Des exemples de ces acides hydroxycarboxyliques comprennent l'acide citrique et l'acide tartrique. Les acides hydroxycarboxyliques particulièrement préférés sont les acides $\alpha,\alpha$-diméthylolalcanoïques dans lesquels x=2 et y=1 dans la formule générale ci-dessus, tels que par exemple, l'acide 2,2-diméthylolpropionique.

La teneur en groupes anioniques pendant dans le polyuréthanne peut varier dans de larges limites, mais devrait toujours être suffisante pour assurer le degré requis de dispersibilité dans l'eau du polyuréthanne. Spécifiquement, la quantité totale dans le polyuréthanne de ces composés contenant des groupes anioniques peut être de 1 à 25% en poids du polyuréthanne, de préférence, de 4 à 10% en poids.

La préparation du prépolymère de polyuréthanne terminé par des groupes isocyanate peut être exécutée de manière conventionnelle en faisant réagir un excès stoechiométrique du (des) polyisocyanate(s) organique(s) avec le(s) composé(s) organique(s) contenant au moins deux groupes réagissant avec le groupe isocyanate et l'autre (les autres)

composé(s) réagissant avec le groupe isocyanate dans des conditions substantiellement anhydres, à une température comprise entre 50 et 120°C, de préférence entre 70 et 95°C, jusqu'à ce que la réaction entre les groupes isocyanate et les groupes réagissant avec le groupe isocyanate soit substantiellement complète. Cette réaction peut être facilitée par l'addition de 5 à 40% en poids, de préférence, de 10 à 20% en poids, de solvant afin de réduire la viscosité du prépolymère si cela s'avère nécessaire. Des solvants appropriés, seuls ou en mélanges, sont ceux qui ne sont pas réactifs envers les groupes isocyanate, tels que les cétones, les esters et les amides, comme la N,N-diméthylformamide, la N-cyclohexylpyrrolidone et la N-méthylpyrrolidone. Les solvants préférés sont les cétones et les esters avec une température d'ébullition relativement faible, de sorte qu'ils peuvent aisément être éliminés, avant, pendant ou après l'extension des chaînes, par distillation sous pression réduite. Des exemples de ces solvants sont l'acétone, la méthyléthylcétone, la diisopropylcétone, la méthylisobutylcétone, l'acétate de méthyle et l'acétate d'éthyle.

Si on le désire, le préparation du prépolymère de polyuréthanne terminé par des groupes isocyanate peut être exécutée en présence de n'importe lequel des catalyseurs connus qui conviennent pour la préparation de polyuréthannes tels que les amines ou les composés organométalliques. Des exemples de ces catalyseurs comprennent la triéthylènediamine, la N-éthylmorpholine, la triéthylamine, le dilaurate de dibutylétain, l'octanoate stanneux, le diacétate de dioctylétain, l'octanoate de plomb, l'oléate stanneux, l'oxyde de dibutylétain, etc..

Lors de la préparation du prépolymère de polyuréthanne terminé par des groupes isocyanate, les réactifs sont généralement mis en oeuvre dans des proportions correspondant à un rapport des groupes isocyanate aux groupes réagissant avec le groupe isocyanate d'environ 1,1:1 à environ 4:1, de préférence d'environ 1,3:1 à 3:1.

Les groupes acide qui peuvent être présents dans le prépolymère de polyuréthanne sont convertis en groupes anioniques par neutralisation desdits groupes acide, avant ou simultanément avec la préparation d'une dispersion aqueuse de ce prépolymère. La méthode de dispersion du prépolymère de polyuréthanne est bien connue de l'homme du métier et nécessite un mélange rapide avec une tête de mélangeur à haute vitesse de cisaillement. De préférence, le prépolymère de polyuréthanne est ajouté à l'eau sous agitation vigoureuse ou, alternativement, l'eau peut être mélangée dans le prépolymère.

Des agents de neutralisation ou de quaternisation appropriés pour la conversion des groupes acide mentionnés ci-dessus en groupes anioniques pendant ou avant la dispersion dans l'eau des prépolymères de polyuréthanne terminés par des groupes isocyanate peuvent être des bases organiques volatiles et/ou des bases non volatiles. Les bases organiques volatiles sont celles dont au moins 90% se volatilise pendant la formation du film dans les conditions ambiantes, tandis que les bases non volatiles sont celles dont au moins 95% ne se volatilise pas pendant la formation du film dans les conditions ambiantes.

Des bases organiques volatiles appropriées peuvent être choisies dans le groupe consistant en la triméthylamine, la triéthylamine, la triisopropylamine, la tributylamine, la N,N-diméthylcyclohexylamine, la N,N-diméthylaniline, la N-méthylmorpholine, la N-méthylpipérazine, la N-méthylpyrrolidine et la N-méthylpipéridine.

Des bases non volatiles appropriées comprennent celles contenant des métaux monovalents, de préférence des métaux alcalins tels que le lithium, le sodium ou le potassium. Ces bases non volatiles peuvent être appliquées sous la forme de sels organiques ou inorganiques, de préférence sous la forme de sels dont les anions ne restent pas dans la dispersion tels que les hydrures, les hydroxydes, les carbonates ou les bicarbonates.

La quantité totale de ces agents de neutralisation doit être calculée en fonction de la quantité totale de groupes acide à neutraliser. Dans le cas où l'on utilise une base volatile, pour être tout à fait certain que tous les groupes acide sont neutralisés, il est judicieux d'ajouter l'agent de neutralisation en un excès de 5 à 30% en poids, de préférence, de 10 à 20% en poids.

Les dispersions aqueuses de polyuréthannes peuvent être préparées en dispersant le prépolymère de polyuréthanne terminé par des groupes isocyanate (éventuellement dissous dans un solvant organique) dans un milieu aqueux et en réalisant l'extension des chaînes du prépolymère dans la phase aqueuse au moyen d'un agent d'extension de chaîne contenant des atomes d'hydrogène actifs.

L'agent d'extension de chaîne contenant des atomes d'hydrogène actifs qui peut être utilisé pour réagir avec le prépolymère de polyuréthanne terminé par des groupes isocyanate est, d'une manière appropriée, une polyamine primaire ou secondaire, aliphatique, alicyclique, aromatique ou hétérocyclique, soluble dans l'eau, contenant jusqu'à 80, de préférence jusqu'à 12 atomes de carbone ou encore de l'eau. Dans ce dernier cas, on obtient un polyuréthanne ayant complètement réagi et ne possédant plus de groupes isocyanate libres résiduels.

Lorsque l'extension des chaînes du prépolymère de polyuréthanne est effectuée avec une polyamine, la quantité totale de polyamine doit être calculée en fonction de la quantité de groupes isocyanate présents dans le prépolymère de polyuréthanne de manière à obtenir un polyuréthanne-urée ayant complètement réagi et ne possédant plus de groupes isocyanate libres résiduels; la polyamine utilisée dans ce cas, a une fonctionnalité moyenne de 2 à 4, de préférence de 2 à 3.

Le degré de non linéarité du polyuréthanne-urée est déterminé par la fonctionnalité de la polyamine utilisée pour l'extension des chaînes. La fonctionnalité désirée peut être obtenue en mélangeant des polyamines de différentes fonctionnalités en amine. Par exemple, une fonctionnalité de 2,5 peut être obtenue en utilisant des mélanges équimolaires de diamines et de triamines.

Des exemples de tels agents d'extension des chaînes comprennent l'hydrazine, l'éthylènediamine, la pipérazine, la diéthylènetriamine, la triéthylènetétramine, la tétraéthylènepentamine, la pentaéthylènehexamine, la N,N,N-tris (2-aminoéthyl)amine, la N-(2-pipérazinoéthyl)éthylènediamine, la N,N'-bis(2-aminoéthyl)pipérazine, la N,N,N'-tris (2-aminoéthyl)éthylènediamine, la N-[N-(2-aminoéthyl)-2-aminoéthyl]-N'-(2-aminoéthyl)pipérazine, la N-(2-aminoéthyl)-N'-(2-pipérazinoéthyl)éthylènediamine, la N,N-bis(2-aminoéthyl)-N-(2-pipérazinoéthyl)amine, la N,N-bis(2-pipérazinoéthyl)amine, la guanidine, la mélamine, la N-(2-aminoéthyl)-1,3-propanediamine, la 3,3'-diaminobenzidine, la 2,4,6-triaminopyrimidine, la dipropylènetriamine, la tétrapropylènepentamine, la tripropylènetétramine, la N,N-bis (6-aminohexyl)amine, la N,N'-bis(3-aminopropyl)éthylènediamine, la 2,4-bis(4'-aminobenzyl)aniline, la 1,4-butanediamine, la 1,6-hexanediamine, la 1,8-octanediamine, la 1,10-décanediamine, la 2-méthylpentaméthylènediamine, la 1,12-dodécanediamine, l'isophoronediamine (ou 1-amino-3-aminométhyl-3,5,5-triméthylcyclohexane), le bis(4-aminocyclohexyl)méthane (ou bis(aminocyclohexane-4-yl)méthane) et le bis(4-amino-3-méthylcyclohexyl)méthane (ou bis (amino-2-méthylcyclohexane-4-yl)méthane), les polyéthylène imines, les polyoxyéthylène amines et/ou les polyoxypropylène amines (par exemple, les Jeffamines de la société TEXACO).

La quantité totale de polyamines doit être calculée en fonction de la quantité de groupes isocyanate présents dans le prépolymère de polyuréthanne. Pendant l'extension des chaînes, le rapport entre les groupes isocyanate dans le prépolymère et les atomes d'hydrogène actifs dans l'agent d'extension de chaîne est compris dans l'intervalle d'environ 1,0:0,7 à environ 1,0:1,1, de préférence d'environ 1,0:0,9 à environ 1,0:1,02 sur base des équivalents.

La réaction d'extension des chaînes est généralement exécutée à une température comprise entre 5 et 90°C, de préférence entre 20 et 50°C. Lorsque l'agent d'extension des chaînes est différent de l'eau, par exemple une polyamine, il peut être ajouté au prépolymère avant ou après la dispersion dans un milieu aqueux contenant l'agent de neutralisation pour les groupes acide pendant le long de la chaîne. Selon une autre forme de réalisation, le prépolymère peut être soumis à l'extension des chaînes alors qu'il est dissous dans un solvant organique, à la suite de laquelle on ajoute de l'eau à la solution de polymère jusqu'à ce que l'eau forme une phase continue et on enlève le solvant par distillation afin de former une simple dispersion aqueuse du polyuréthanne. Les gradients locaux de concentration en amine sont de préférence évités en formant préalablement une solution aqueuse de la polyamine utilisée pour l'extension des chaînes et en ajoutant lentement cette solution à la dispersion du prépolymère de polyuréthanne.

Polymère vinylique

Le composant polymère vinylique des compositions de la présente invention est un polymère vinylique possédant des groupes fonctionnels ester d'acétoacétoxyalkyle pendant le long de la chaîne. Le polymère vinylique présent dans les compositions de la présente invention est de préférence le produit formé par polymérisation radicalaire d'au moins un monomère monoéthyléniquement insaturé contenant un groupe ester d'acétoacétoxyalkyle avec au moins un autre monomère éthyléniquement insaturé.

Les monomères monoéthyléniquement insaturés contenant un groupe ester d'acétoacétoxyalkyle préférés, sont les composés de formule $R-O-CO-CH_2-CO-CH_3$ dans laquelle R représente un groupe $CH_2=CR'-COO-R''-$ ou un groupe $CH_2=CR'-R''-$, dans lequel R' est -H ou $-CH_3$ et R" est un radical alkylène possédant de 1 à 12 atomes de carbone. Un monomère de ce type particulièrement préféré est le méthacrylate d'acétoacétoxyéthyle.

La quantité de monomère monoéthyléniquement insaturé contenant un groupe ester d'acétoacétoxyalkyle représente généralement d'environ 1 à environ 80% en poids, de préférence d'environ 5 à 50% en poids du polymère vinylique.

Les autres monomères éthyléniquement Insaturés (c'est-à-dire les monomères ne fournissant pas la fonctionnalité ester d'acétoacétoxyalkyle) qui peuvent être utilisés pour la préparation du polymère vinylique sont choisis dans le groupe consistant en

a) les acrylates d'alkyle et les méthacrylates d'alkyle dont le radical alkyle contient de 1 à 12 atomes de carbone, tels que le méthacrylate de méthyle, l'acrylate de méthyle, l'acrylate d'éthyle, l'acrylate de butyle, l'acrylate de 2-éthylhexyle, l'acrylate d'isooctyle, l'acrylate de nonyle et l'acrylate de dodécyle,
b) les (méth)acrylates d'hydroxyalkyle dont le radical alkyle contient de 1 à II atomes de carbone,
c) les hydrocarbures aromatiques substitués par un groupe vinyle, tels que le styrène, l'α-méthylstyrène, etc.,
d) les amides d'acides carboxyliques α,β-éthyléniquement insaturés tels que l'acrylamide, le méthacrylamide, le méthoxyméthylacrylamide, le N-méthylolacrylamide, etc.,
e) les carboxylates α,β-éthyléniquement insaturés possédant un groupe époxy, tels que le (méth)acrylate de glycidyle,
f) les esters vinyliques d'acides aliphatiques comme l'acétate de vinyle, le versatate de vinyle, (versatates: ester d'acides monocarboxyliques tertiaires en $C_9$, $C_{10}$ et $C_{11}$),
g) le chlorure de vinyle et le chlorure de vinylidène,

h) les sulfonates monoéthyléniquement insaturés tels que les sels de métaux alcalins des acides styrène-sulfonique, 2-acrylamido-2-méthyl-propanesulfonique, ou du méthacrylate de 2-sulfoéthyle, du méthacrylate de 3-sulfopropyle, etc. (surfactants internes).

Un desdits monomères peut éventuellement être un acide carboxylique $\alpha,\beta$-monoéthyléniquement insaturé tel que l'acide acrylique ou l'acide méthacrylique. Ledit acide carboxylique $\alpha,\beta$-monoéthyléniquement insaturé peut être présent en une quantité de 0 à 10% en poids du polymère vinylique.

Les polymères vinyliques possédant des groupes ester d'acétoacétoxyalkyle qui peuvent être utilisés dans la présente invention ont de préférence un poids moléculaire moyen en poids compris dans l'intervalle de 10.000 à 500.000, de préférence, de 150.000 à 300.000.

Le polymère vinylique possédant des groupes fonctionnels ester d'acétoacétoxyalkyle peut être préparé selon toute technique appropriée de polymérisation initiée par des radicaux libres.

La polymérisation en émulsion des monomères peut être exécutée selon des méthodes connues, par exemple en utilisant une méthode semi-continue dans laquelle on introduit une préémulsion des monomères mentionnés ci-dessus dans un réacteur contenant une solution aqueuse d'un initiateur de radicaux libres et on chauffe à une température constante comprise entre 60 et 95°C, de préférence entre 75 et 85°C, pendant une durée de 1 à 4 heures, de préférence de 2 à 3 heures, pour achever la réaction.

La préémulsion des monomères peut être préparée en ajoutant sous agitation chaque monomère à une solution aqueuse d'un agent émulsifiant, de préférence un agent émulsifiant du type anionique, tel que par exemple le sulfate de lauryle, le dodécylbenzènesulfonate , le dodécyldiphényloxydedisulfonate, les alkylphénylpoly(oxyéthylène)sulfates ou les sulfosuccinates de dialkyle, dont le radical alkyle contient de 8 à 12 atomes de carbone. Les nonylphénylpoly(oxyéthylène)sulfates sont particulièrement préférés. On comprendra que des agents émulsifiants de type non ionique peuvent également être utilisés.

Des initiateurs de radicaux libres conventionnels sont utilisés pour la polymérisation des monomères, comme par exemple le peroxyde d'hydrogène, l'hydroperoxyde de tert.-butyle, les persulfates de métaux alcalins ou le persulfate d'ammonium.

Composition aqueuse de résines autoréticulables.

Pour préparer les compositions de résines autoréticulables selon la présente invention, on mélange d'une manière homogène et à la température ambiante la dispersion aqueuse de polyuréthannes et la dispersion aqueuse de polymère vinylique mentionnées ci-dessus, dans un appareil de mélange approprié.

Cette composition aqueuse de résines peut être avantageusement utilisée en tant que composition de revêtement protecteur ou adhésif pouvant être appliqué selon toute méthode conventionnelle comprenant l'enduction à la brosse, par pulvérisation, au couteau, par immersion ou par rouleaux gravés etc. sur tout substrat, comprenant le bois, les tissus, le papier, les plastiques, les panneaux de fibres agglomérées, le carton, le verre, les fibres de verre, les céramiques, le béton, le cuir, les métaux, etc., dans des buts industriels ou domestiques.

D'une manière appropriée, les compositions aqueuses de résines ont une teneur totale en matières sèches d'environ 20 à 65% en poids, de préférence d'environ 25 à 50% en poids, une viscosité mesurée à 25°C de 50 à 5000 mPa.s, une valeur de pH de 7 à 11, de préférence de 8 9 à et une dimension moyenne de particules d'environ 10 à 1000 nanomètres, de préférences, de 50 à 300 nanomètres.

Après avoir été appliqués sur l'article en question, les revêtements déposés sont durcis à la température ambiante pendant une période de 3 jours, ou à plus haute température pendant une période plus courte. Les revêtements durcis ainsi obtenus présentent une excellente adhérence, une remarquable résistance à l'eau et aux solvants, résistance mécanique, durabilité, flexibilité et transparence.

Les compositions de résines aqueuses de la présente invention peuvent donc être utilisées pour la préparation de vernis et de revêtements protecteurs, ainsi que d'adhésifs de laminage, etc., ayant d'excellentes propriétés.

Si on le souhaite, les compositions de la présente invention peuvent comprendre d'autres substances auxiliaires (additifs) qui peuvent être ajoutés à la composition finale en quantité relativement faible de manière à conférer ou améliorer des propriétés désirables ou à supprimer des propriétés indésirables. Ces additifs comprennent les charges, les plastifiants, les pigments, les colorants, le noir de carbone, les solutions colloïdales de silice et les agents d'étalement, les agents mouillants, les agents antimoussants, les stabilisants à la chaleur, les stabilisants à la lumière ultraviolette connus en soi, etc. On peut également mélanger la composition avec d'autres dispersions de polymères, par exemple avec des dispersions d'acétate de polyvinyle, de résines époxy, de polyéthylène, de polystyrène, de polybutadiène, de chlorure de polyvinyle, de polyacrylate et d'autres homopolymères et copolymères.

Les exemples suivants illustrent la présente invention.

Ainsi que le montrent en détails les exemples, il est possible de préparer différentes compositions aqueuses de résines selon l'invention en faisant une combinaison judicieuse des matières de départ, ce qui permet de modifier à

volonté les propriétés chimiques, physiques et technologiques desdites compositions afin de les adapter à leurs futures applications.

Dans ces exemples, la détermination de certaines valeurs caractéristiques a été réalisée selon les méthodes décrites ci-dessous. La teneur en isocyanate d'un mélange de réaction est mesurée par la méthode de titrage en retour à la dibutylamine. La teneur en monomères libres des dispersions de polymère vinylique est controlée par chromatographie en phase gazeuse.

La viscosité ($\eta$) des dispersions aqueuses de polymères est mesurée à 25°C avec un viscosimètre Brookfield RVT, en utilisant une aiguille n°1 à 50 tours/min lorsque la viscosité est inférieure à 200 mPa.s ou une aiguille n°2 à 50 tours/min lorsque la viscosité est supérieure à 200 mPa.s.

La dimension moyenne des particules des dispersions aqueuses est mesurée par diffusion de la lumière laser au moyen d'un appareil Malvern Particle Analyzer Processor du type 7027 & 4600SM.

Toutes les mesures relevées sur les revêtements finals sont réalisées sur un revêtement préparé avec un filmographe réglé pour obtenir une épaisseur appropriée et durci à 20°C pendant 3 jours.

L'essai de ramollissement pour un revêtement est réalisé de la manière suivante: la partie centrale d'une pièce de 10 x 10 cm d'un film de 100 micromètres du revêtement est placée pendant 10 secondes entre deux plaques métalliques chauffées et ensuite évaluée quant à sa consistance mécanique. Cette procédure est répétée plusieurs fois à des intervalles de température croissant de 5-10°C. La température de ramollissement relevée est ta température à laquelle le film ne présente plus de résistance mécanique lorsqu'il est retiré d'entre les plaques.

La température de transition vitreuse (Tg) des différentes résines est mesurée avec un appareil "Thermomechanical Analyzer" 943 (de la société DuPont Instruments) au moyen d'une aiguille (diamètre de 2,54 mm) avec une charge de 50 g sur une pièce de 0,5 x 0,5 cm d'un film de 100 micromètres et en élevant la température de -100°C à +100°C avec un gradient de 10°C par minute.

La résistance à l'éthanol et la résistance à l'eau des revêtements sont évaluées de la manière suivante: quelques gouttes d'éthanol ou d'eau sont déposées sur un film de 100 micromètres du revêtement et recouvertes avec une lamelle de verre de 2 x 2 cm. Après 24 heures, la lamelle de verre est retirée, l'excès de liquide est essuyé et le film est examiné quant aux dommages subis, les taches, le blanchiment et les pertes de résistance mécanique. Le degré de détérioration par l'éthanol est relevé sur une échelle de 1 à 5 dans laquelle 5 indique un aspect inchangé (meilleur) alors que 1 signifie la destruction complète du film (pire). Le degré de blanchiment par l'eau est également relevé sur une échelle de 1 à 5 dans laquelle 5 indique une surface non-blanchie (meilleure) alors que 5 signifie une tache opaque (pire).

La transparence des revêtements est évaluée visuellement sur des films ayant une épaisseur de 100 micromètres avec une échelle d'évaluation de 1 à 7, dans laquelle 1 signifie une transparence parfaite (meilleur) et 7 indique un film opaque (pire).

L'essai de frottement à la méthyléthylcétone (MEK) est effectué de la manière suivante: un film de 50 micromètres est frotté avec un tampon imbibé de méthyléthylcétone jusqu'à ce que le film présente une défaillance (c'est-à-dire soit transpercé). Un frottement représente un mouvement de va-et-vient du tampon. Le nombre relevé est le nombre de frottements nécessaires pour transpercer le film.

Afin de mesurer le taux de gel des compositions aqueuses de résines, un panier taré est immergé 10 secondes dans la composition à évaluer, séché à 20°C pendant 3 jours sous circulation d'air, pesé et ensuite immergé dans la méthyléthylcétone (MEK) ou le N,N-diméthylformamide (DMF) pendant 24 heures à la température ambiante. Le panier est retiré du solvant et séché à la température ambiante pendant 12 heures, puis à 120°C pendant 2 heures, puis pesé à nouveau. Le taux de gel relevé est le rapport exprimé en pour-cent, entre le poids du revêtement mesuré après l'immersion de 24 heures dans le solvant par rapport au poids du revêtement mesuré avant l'immersion dans le solvant, c'est-à-dire le pourcentage en poids de revêtement retenu sur le panier après l'immersion dans le solvant.

Afin de déterminer si une réticulation a eu lieu dans le cas de revêtements adhésifs, un film de 50 micromètres de la composition adhésive est déposé sur différents échantillons de papier siliconé. A intervalles de temps régulier, un film d'adhésif est détaché de l'échantillon de papier siliconé et trempé dans le N,N-diméthylformamide et le film est évalué quant à sa résistance physique. Le temps de réticulation est le temps (en jours) nécessaire pour développer un film stable et insoluble d'adhésif.

L'essai de résistance au pelage des revêtements adhésifs est effectué comme suit: un film de 12 micromètres de téréphtalate de polyéthylène est revêtu avec 4-5 g/m$^2$ d'une composition adhésive (au moyen d'une enduiseuse à main) et est séché 1 minute à 80°C. Ce film est ensuite laminé sous une charge de 5 kg avec un film de 12 micromètres de polyéthylène ou avec une feuille d'aluminium de 12 micromètres. Le laminé est laissé au repos pendant 10 jours à la température ambiante et la résistance au pelage est ensuite évaluée avec un appareil INSTRON 1122 avec une vitesse de traction de 500 mm par minute sur des bandes d'essai de 30 x 10 mm du laminé.

La stabilité au stockage des compositions aqueuses de résines est déterminée en vérifiant des échantillons de 250 g dans des récipients en matière plastique blancs et hermétiques toutes les 2 semaines.

Exemples 1 à 8. Préparation de dispersions aqueuses de polyuréthannes.

Exemple 1.

On introduit 830,0 g d'un polycaprolactone diol (TONE 0210 Polyol de la société UNION CARBIDE) ayant un indice d'hydroxyle de 135,2 mg de KOH/g, 67,0 g d'acide 2,2-diméthylolpropionique, 9,0 g de triméthylolpropane et 675,8 g de 1,3-bis(1-isocyanato-1-méthyléthyl)benzène dans un ballon à quatre cols de deux litres muni d'un agitateur mécanique, d'un thermomètre, d'un réfrigérant à air, d'une entrée d'azote et d'une ampoule à robinet. On chauffe le mélange à 85-95°C sous agitation et on introduit 0,16 g de dilaurate de dibutylétain comme catalyseur. On maintient le mélange réactionnel à 85-95°C pendant 4 heures. A ce stade, le mélange réactionnel a une teneur en isocyanate de 1,44 meq/g. On refroidit alors le prépolymère de polyuréthanne ainsi obtenu à 50-60°C.

On introduit dans une cuve à dispersion munie d'un mélangeur de type COWLES d'une dimension appropriée 1160,0 g d'eau déminéralisée et 23,0 g de triéthylamine en tant qu'agent de neutralisation, et on ajoute lentement 600,0 g du prépolymère de polyuréthanne préparé ci-dessus à 50-60°C sous agitation vigoureuse. Environ 5 minutes après que l'addition du prépolymère est terminée, on ajoute goutte-à-goutte dans la cuve à dispersion 50,1 g de 2-méthylpentaméthylènediamine dissoute dans 87,0 g d'eau déminéralisée. L'extension des chaînes est terminée après environ 4 heures, à la suite de quoi l'on obtient un polyuréthanne-urée ayant complètement réagi. Les caractéristiques de la dispersion obtenue sont données dans le tableau I.

Exemple 2.

Une dispersion aqueuse de polyuréthannes est préparée selon la méthode de l'exemple 1, mais l'on remplace les matières de départ par 1000,0 g d'un polyester ayant un indice d'hydroxyle de 56,1 mg de KOH/g obtenu par la polycondensation de l'acide adipique et du 1,4-butanediol, 100,5 g d'acide 2,2-diméhtylolpropionique et 360,8 g de diisocyanate d'isophorone. On utilise 0,18 g de dilaurate de dibutylétain comme catalyseur. On arrête la réaction lorsque l'on atteint une teneur en isocyanate de 0,51 meq/g et on laisse le prépolymère de polyuréthanne refroidir jusqu'à 50-60°C.

On introduit dans une cuve à dispersion munie d'un mélangeur de type COWLES d'une dimension appropriée 1500,0 g d'eau déminéralisée et 37,3 g de triéthylamine en tant qu'agent de neutralisation et on ajoute lentement 600,0 g du prépolymère de polyuréthanne préparé ci-dessus à 50-60°C sous agitation vigoureuse. Environ 5 minutes après que l'addition du prépolymère est terminée, on ajoute goutte-à-goutte 26,0 g d'isophoronediamine dans le mélange. L'extension des chaînes est terminée après environ 4 heures, à la suite de quoi l'on obtient un polyuréthanne-urée ayant complètement réagi. Les caractéristiques de la dispersion obtenue sont données dans le tableau I.

Exemple 3.

On introduit 512,5 g d'un polypropylène glycol ayant un indice d'hydroxyle de 109,5 mg de KOH/g, 77,1 g d'acide 2,2-diméthylolpropionique, 243,2 g de 2,4-diisocyanato-1-méthylbenzène, 1,6 g d'Irganox 245 de la société CIBA-GEIGY (triéthylèneglycol-bis-[3(3-tert.-butyl-4-hydroxy-5-méthylphényl)propionate]) en tant qu'antioxydant et 208,2 g de N-méthylpyrrolidone dans un ballon à quatre cols de deux litres muni d'un thermomètre, d'un agitateur mécanique, d'un réfrigérant à air, d'une entrée d'azote et d'une ampoule à robinet. On chauffe le mélange à 70-80°C sous agitation pendant une demi-heure pour achever la réaction; à ce stade, le mélange réactionnel a une teneur en isocyanate de 0,54 meq/g.

On introduit dans une cuve à dispersion munie d'un mélangeur de type COWLES d'une dimension appropriée 750,0 g d'eau déminéralisée et 23,5 g de triéthylamine en tant qu'agent de neutralisation et on ajoute lentement 350,0 g du prépolymère de polyuréthanne préparé ci-dessus à 50-60°C sous agitation vigoureuse. L'extension des chaînes est réalisée par hydrolyse des groupes isocyanate et est terminée après environ 2 heures, fournissant une dispersion colloïdale d'un polyuréthanne ayant complètement réagi. Les caractéristiques de la dispersion obtenue sont données dans le tableau I.

Exemple 4.

Une dispersion aqueuse de polyuréthannes est préparée selon la méthode de l'exemple 1, mais, à la place de la triéthylamine, on utilise 7,5 g d'hydroxyde de potassium comme agent de neutralisation. Les caractéristiques de la dispersion obtenue sont données dans le tableau I.

Exemple 5.

On introduit 384,4 g d'un polypropylène glycol ayant un indice d'hydroxyle de 109,5 mg de KOH/g, 53,1 g d'un polypropylène glycol ayant un indice d'hydroxyle de 264,0 mg de KOH/g, 139,2 g de 2,4-diisocyanato-1-méthylbenzène, 1,6 g d'Irganox 245 de la société CIBA-GEIGY (triéthylèneglycol-bis[3(3-tert.-butyl-4-hydroxy-5-méthylphényl) propionate]) en tant qu'antioxydant dans un ballon à quatre cols de deux litres muni d'un agitateur mécanique, d'un thermomètre, d'un réfrigérant à air, d'une entrée d'azote et d'une ampoule à robinet. On chauffe le mélange à 60°C sous agitation pendant 30 minutes et ensuite à 90°C pendant 2 heures. On ajoute alors 33,5 g d'acide 2,2-diméthylolpropionique et 152,6 g de N,N-diméthylformamide et on maintient encore la température du mélange à 90°C pendant 2 heures supplémentaires pour terminer la réaction. A ce stade, le mélange réactionnel a une teneur en isocyanate de 0,11 meq/g.

On introduit dans une cuve à dispersion munie d'un mélangeur de type COWLES d'une dimension appropriée 1030,9 g d'eau déminéralisée et 15,9 g de triéthylamine en tant qu'agent de neutralisation, puis on ajoute lentement 400,0 g du prépolymère de polyuréthanne préparé ci-dessus à 50-60°C sous agitation vigoureuse. L'extension des chaînes est réalisée par hydrolyse des groupes isocyanate et est terminée après environ 2 heures, fournissant une dispersion colloïdale d'un polyuréthanne adhésif ayant complètement réagi. Les caractéristiques de la dispersion obtenue sont données dans le tableau I.

Exemple 6.

On introduit 461,3 g d'un polypropylène glycol ayant un indice d'hydroxyle de 109,5 mg de KOH/g, 50,0 g d'un polyéthylène glycol ayant un indice d'hydroxyle de 56,1 mg de KOH/g, 9,0 g de Tercarol G310 de la société CARBOCHIM (produit d'addition d'une mole de glycérol avec 3 moles d'oxyde de propylène ayant un indice d'hydroxyle d'environ 600 mg de KOH/g), 50,0 g d'acide 2,2-diméthylolpropionique et 28,5 g d'acétone dans un ballon à quatre cols de deux litres muni d'un thermomètre, d'un agitateur mécanique, d'un réfrigérant de Liebig, d'une entrée d'azote et d'une ampoule à robinet. On chauffe le mélange à 50°C sous agitation. On ajoute alors 198,4 g de 2,4-diisocyanato-1-méthylbenzène et le mélange réactionnel est chauffé à 85°C pendant 4 heures pour terminer la réaction. On refroidit ensuite le mélange réactionnel à 40-50°C et on le dilue avec 56,9 g d'acétone. A ce stade, le mélange réactionnel a une teneur en isocyanate de 0,56 meq/g.

On introduit dans une cuve à dispersion préchauffée à 60°C munie d'un mélangeur de type COWLES d'une dimension appropriée 450,0 g du prépolymère de polyuréthanne préparé ci-dessus à 50-60°C. On ajoute ensuite lentement un mélange de 29,8 g d'une solution aqueuse d'hydrazine à 15% en poids, 16,0 g d'une solution aqueuse d'ammoniaque à 25% en poids et de 156,0 g d'eau déminéralisée. On ajoute ensuite encore rapidement 156,0 g d'eau déminéralisée afin d'opérer l'inversion de phase et on verse encore 156,0 g d'eau déminéralisée dans le mélange pour ajuster la viscosité. On cesse l'agitation après 30 minutes et on élimine l'acétone (environ 4% en poids du mélange) sous pression réduite en chauffant à 70°C pendant 2 heures jusqu'à ce qu'une quantité résiduelle d'acétone de 0,15% en poids soit obtenue (contrôlée par chromatographie en phase gazeuse). Les caractéristiques de la dispersion aqueuse du polyuréthanne adhésif ayant complètement réagi ainsi obtenu sont données dans le tableau I.

Exemple 7.

On introduit 345,5 d'un polyéthylène glycol ayant un indice d'hydroxyle de 187,0 mg de KOH/g, 60,4 g de diéthylène glycol, 33,0 g de triméthylolpropane, 28,8 g d'acide 5-(sodiosulfo)isophtalique et 21,0 g d'eau déminéralisée dans un ballon à quatre cols d'un litre muni d'un thermomètre, d'un agitateur mécanique, d'une colonne à distiller, d'une entrée d'azote et d'une ampoule à robinet. On chauffe le mélange à 80°C sous agitation pendant 2 heures et on ajoute alors 115,7 g d'acide adipique, 1,1 g de Fascat 4102 (un catalyseur à base de monobutylétain de la société M&T CHEMICALS) et 0,14 g de tris(nonylphényl)phosphite (stabilisant). On augmente progressivement la température jusqu'à 170°C sur une période de 2 à 3 heures, pendant laquelle on recueille 53,2 g d'eau au moyen de la colonne de distillation. Au moment où la vitesse de distillation diminue, on applique une pression réduite de 100 mm de Hg.

Le polyol sulfoné obtenu possède un indice d'hydroxyle de 132,0 mg de KOH/g et un indice d'acide de 2,C mg de KOH/g.

On introduit 425,5 g du polyol sulfoné préparé ci-dessus, 211,1 g de 1,3-bis(1-isocyanato-1-méthyléthyl)benzène et 0,06 g de dilaurate de dibutylétain en tant que catalyseur dans un autre ballon à quatre cols d'un litre, muni d'un thermomètre, d'un agitateur mécanique, d'un réfrigérant à air, d'une entrée d'azote et d'une ampoule à robinet. On chauffe le mélange à 90°C pendant 30 minutes sous agitation. A ce stade, le mélange réactionnel a une teneur en isocyanate de 1,09 meq/g.

On introduit dans une cuve à dispersion munie d'un mélangeur de type COWLES d'une dimension appropriée 1047,6 g d'eau déminéralisée et on ajoute lentement et sous agitation vigoureuse 400,0 g du prépolymère de polyuréthanne sulfoné préparé ci-dessus. Environ 5 minutes après que l'addition du prépolymère est terminée, on ajoute lentement dans le mélange 24,4 g de 2-méthylpentaméthylènediamine dans 100,0 g d'eau déminéralisée. L'extension des chaînes est terminée après environ 4 heures, après quoi l'on obtient une dispersion aqueuse d'un polyuréthanne adhésif ayant complètement réagi. Les caractéristiques de la dispersion obtenue sont données dans le tableau I.

Exemple 8.

Une dispersion aqueuse de polyuréthannes est préparée selon la méthode de l'exemple 1, mais l'on remplace les matières de départ par 400,3 g d'un polycarbonate-polyester (DESMOPHEN C200 de la société BAYER) ayant un indice d'hydroxyle de 56,0 mg de KOH/g, 53,6 g d'acide 2,2-diméthylolpropionique, 346,1 g de diisocyanate d'isophorone et 200,0 g de N-méthylpyrrolidone. On utilise 0,10 g de dilaurate de dibutylétain comme catalyseur. On arrète la réaction lorsque l'on atteint une teneur en isocyanate de 1,44 meq/g et on laisse le prépolymère de polyuréthanne refroidir jusqu'à 50-60°C.

On introduit dans une cuve à dispersion munie d'un mélangeur de type COWLES d'une dimension appropriée 864,0 g d'eau déminéralisée et 26,7 g de triéthylamine en tant qu'agent de neutralisation et on ajoute lentement 600,0 g du prépolymère de polyuréthanne préparé ci-dessus à 50-60°C sous agitation vigoureuse. Environ 5 minutes après que l'addition du prépolymère est terminée, on ajoute goutte-à-goutte dans le mélange 50,1 g d'isophoronediamine. L'extension des chaînes est terminée après environ 4 heures, après quoi l'on obtient un polyuréthanne-urée ayant complètement réagi. Les caractéristiques de la dispersion obtenue sont données dans le tableau I.

On prépare également, à titre de comparaison, une dispersion aqueuse de polyuréthannes, numérotée C1, qui n'est pas conforme à l'invention. Exemple C1 (comparatif).

On introduit 830,0 g d'un polycaprolactone diol (TONE 0210 Polyol de la société UNION CARBIDE) ayant un indice d'hydroxyle de 135,2 mg de KOH/g, 366,0 g de Tegomer D-3403 de la société Th.GOLDSCHMIDT A.G. (un polyéther-1,3-diol ayant un indice d'hydroxyle de 92,0 mg de KOH/g et de formule

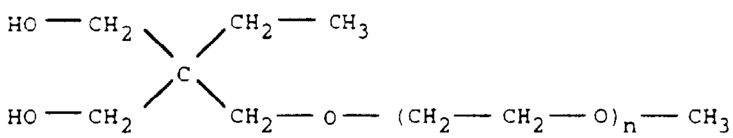

)

et 444,0 g de 1,3-bis(1-isocyanato-1-méthyléthyl)benzène dans un ballon à quatre cols de deux litres muni d'un thermomètre, d'un agitateur mécanique, d'un réfrigérant à air, d'une entrée d'azote et d'une ampoule à robinet. On chauffe le mélange à 85-95°C sous agitation et on ajoute 0,16 g de dilaurate de dibutylétain comme catalyseur. On maintient le mélange réactionnel à 85-95°C pendant 4 heures pour achever la réaction. A ce stade, le mélange réactionnel a une teneur en isocyanate de 0,52 meq/g.

On introduit dans une cuve à dispersion munie d'un mélangeur de type COWLES d'une dimension appropriée 918,0 g d'eau déminéralisée et on ajoute lentement 500,0 g du prépolymère de polyuréthanne préparé ci-dessus à 50-60°C sous agitation vigoureuse. Environ 5 minutes après que l'addition du prépolymère est terminée, on ajoute goutte-à-goutte dans la cuve à dispersion 7,8 g d'éthylènediamine dissoute dans 25,0 g d'eau déminéralisée. L'extension des chaînes est terminée après environ 4 heures, après quoi l'on obtient un polyuréthanne-urée ayant complètement réagi; ce polymère est un polyuréthanne non fonctionnalisé. Les caractéristiques de la dispersion obtenue sont données dans le tableau I.

Le tableau I montre la teneur en matières sèches (en % en poids), la viscosité (η), la valeur du pH, la dimension moyenne des particules (exprimée en nanomètres) mesurés pour les dispersions de polyuréthannes préparées aux exemples 1 à 8 et à l'exemple comparatif C1, ainsi que la température de ramollissement et la température de transition vitreuse (Tg) relevées avec les films de polymère préparés avec celles-ci. Ces films (100 micromètres d'épaisseur) sont obtenus par coulée des dispersions sur des plaques de verre, séchage à 80°C pendant 3 heures et repos de 2 jours à la température ambiante.

TABLEAU I.

| Caractéristiques des polyuréthannes. | | | | | | |
|---|---|---|---|---|---|---|
| Exemple | Dispersion aqueuse de polyuréthannes | | | | Film sec | |
| | Teneur en matières sèches (%) | η(25°C) (mPa. s) | pH | Dimension moyenne des particules (nm) | Température de ramollissement (°C) | Tg (°C) |
| 1 | 35 | 41 | 8,8 | 130 | 120 | -10 |
| 2 | 35 | 40 | 8,8 | 35 | 180 | -53 |
| 3 | 23 | 740 | 8,3 | 29 | 165 | -14 |
| 4 | 35 | 52 | 8,4 | 125 | 120 | -10 |
| 5 | 23 | 48 | 7,9 | 34 | - (2) | - |
| 6 | 45 | 580 | 6,7 | 140 | - | - |
| 7 | 27 | 360 | 8,7 | 175 | - | - |
| 8 | 35 | 62 | 7,9 | 91 | 175 | -41 |
| C1(1) | 35 | 36 | 7,2 | 79 | 105 | -38 |

(1) à titre comparatif
(2) valeur non relevée

Exemples 9 à 16. Préparation de dispersions aqueuses de polymères vinyliques.

Exemple 9.

Dans un réservoir contenant 290,0 g d'eau déminéralisée, on introduit 28,6 g d'une solution aqueuse de nonylphénylpoly(oxyéthylène)sulfate (teneur en matières sèches de 34% en poids) de formule

$$C_9H_{19}\text{-}\phi\text{-}(O\text{-}CH_2\text{-}CH_2)_n\text{-}SO_4Na \qquad (I)$$

dans laquelle φ est un radical paraphénylène et $\bar{n}$ = 10, 28,6 g d'une solution aqueuse de nonylphénoxypoly(éthylèneoxy)éthanol (teneur en matières sèches de 70% en poids) de formule

$$C_9H_{19}\text{-}\phi\text{-}O\text{-}(CH_2\text{-}CH_2\text{-}O)_{n\text{-}1}\text{-}CH_2\text{-}CH_2\text{-}OH \qquad (II)$$

dans laquelle φ est un radical paraphénylène et $\bar{n}$ = 30 et 5,0 g du sel de potassium du méthacrylate de 3-sulfopropyle. On y ajoute ensuite, sous agitation, 550,0 g de méthacrylate de méthyle, 385,0 g d'acrylate de 2-éthylhexyle, 50,0 g de méthacrylate d'acétoacétoxyéthyle et 15,0 g d'acide acrylique; il en résulte la formation d'une préémulsion.

Dans un réacteur contenant 4,3 g de la solution aqueuse de nonylphénylpoly(oxyéthylène)sulfate (I) mentionnée ci-dessus dans 720,0 g d'eau déminéralisée chauffée au préalable à 80°C, on introduit sous agitation 2,4 g de persulfate d'ammonium. On ajoute ensuite dans le mélange ainsi obtenu et sur une période de 2 heures et demie, la préémulsion préparée ci-dessus.

On maintient le réacteur à 80°C pendant 2 heures pour achever la réaction et on le laisse ensuite refroidir jusqu'à la température ambiante. On y ajoute ensuite lentement 10,0 g d'une solution aqueuse d'ammoniaque à 25% en poids. Le latex ainsi obtenu possède un taux de monomères libres inférieur à 0,01% en poids (contrôlé par chromatographie en phase gazeuse), une quantité de particules ayant une dimension supérieure à 50 micromètres (niveau de coagulum à 50 micromètres) qui est inférieure à 50 mg/l et une température minimale de formation de film d'environ 17°C. Les autres caractéristiques de ce latex sont fournies au tableau II.

Exemple 10.

On prépare un latex acrylique selon le mode opératoire de l'exemple 9, mais on ajoute 6,0 g de n-dodécylmercaptan, en tant qu'agent de transfert, après la préparation de la préémulsion.

Le latex ainsi obtenu possède un taux de monomères libres inférieur à 0,01% en poids, un niveau de coagulum à 50 micromètres inférieur à 50 mg/l et une température minimale de formation de film d'environ 17°C. Les autres

caractéristiques de ce latex sont fournies au tableau II.

Exemple 11.

On suit le mode opératoire de l'exemple 9, mais l'on remplace les matières de départ de la préémulsion par 350,0 g de méthacrylate de méthyle, 370,0 g d'acrylate de méthyle, 150,0 g d'acrylate de 2-hydroxyéthyle, 50,0 g de styrène, 50,0 g de méthacrylate d'acétoacétoxyéthyle et 30,0 g d'acide méthacrylique et l'on ajoute 6,0 g de n-dodécylmercaptan, en tant qu'agent de transfert, après la préparation de la préémulsion.

Le latex ainsi obtenu possède un taux de monomères libres inférieur à 0,01% en poids, un niveau de coagulum à 50 micromètres inférieur à 50 mg/l. Ce latex est dilué dans 3130 g d'eau déminéralisée et ensuite neutralisé avec 10 g d'une solution aqueuse d'ammoniaque à 25 % en poids. Les autres caractéristiques de ce latex sont fournies au tableau II.

Exemple 12.

Dans un réservoir contenant 290,0 g d'eau déminéralisée, on introduit sous agitation 28,6 g de la solution aqueuse de nonylphénylpoly(oxyéthylène)sulfate (I) décrite à l'exemple 9. On y ajoute ensuite, sous agitation, 579,0 g de méthacrylate de méthyle, 405,0 g d'acrylate de 2-éthylhexyle, 1,0 g de méthacrylate d'acétoacétoxyéthyle et 15,0 g d'acide acrylique; il en résulte la formation d'une préémulsion.

Dans un réacteur contenant 4,3 g de la solution aqueuse de nonylphénylpoly(oxyéthylène)sulfate (I) décrite à l'exemple 9, dans 720,0 g d'eau déminéralisée chauffée au préalable à 80°C, on introduit sous agitation 2,0 g de persulfate d'ammonium. On introduit ensuite dans le mélange et sur une période de 2 heures et demie, la préémulsion préparée ci-dessus.

On maintient le réacteur à 80°C pendant 2 heures pour achever la réaction et on le laisse ensuite refroidir jusqu'à la température ambiante. On y ajoute ensuite lentement 10,0 g d'une solution aqueuse d'ammoniaque à 25% en poids. Le latex ainsi obtenu possède un taux de monomères libres inférieur à 0,01% en poids et une température minimale de formation de film d'environ 17°C. Les autres caractéristiques de ce latex sont fournies au tableau II.

Exemple 13.

On suit le mode opératoire de l'exemple 12, mais l'on remplace les matières de départ de la préémulsion par 575,0 g de méthacrylate de méthyle, 400,0 g d'acrylate de 2-éthylhexyle, 10,0 g de méthacrylate d'acétoacétoxyéthyle et 15,0 g d'acide acrylique. Le latex ainsi obtenu possède un taux de monomères libres inférieur à 0,01% en poids et une température minimale de formation de film d'environ 17°C. Les autres caractéristiques de ce latex sont fournies au tableau II.

Exemple 14.

On suit le mode opératoire de l'exemple 12, mais l'on remplace les matières de départ de la préémulsion par 520,0 g de méthacrylate de méthyle, 365,0 g d'acrylate de 2-éthylhexyle, 100,0 g de méthacrylate d'acétoacétoxyéthyle et 15,0 g d'acide acrylique. Le latex ainsi obtenu possède un taux de monomères libres inférieur à 0,01% en poids et une température minimale de formation de film d'environ 17°C. Les autres caractéristiques de ce latex sont fournies au tableau II.

Exemple 15.

On suit le mode opératoire de l'exemple 12, mais l'on remplace les matières de départ de la préémulsion par 290,0 g de méthacrylate de méthyle, 195,0 g d'acrylate de 2-éthylhexyle, 500,0 g de méthacrylate d'acétoacétoxyéthyle et 15,0 g d'acide acrylique. Le latex ainsi obtenu possède un taux de monomères libres inférieur à 0,01% en poids et une température minimale de formation de film d'environ 17°C. Les autres caractéristiques de ce latex sont fournies au tableau II.

Exemple 16.

Dans un réservoir contenant 600,0 g d'eau déminéralisée, on introduit sous agitation, 1,5 g d'hydroxyde de sodium, 7,5 g d'acide 2-acrylamido-2-méthylpropanesulfonique, 11,1 g d'une solution aqueuse de nonylphénylpoly(oxyéthylène)sulfate (I, mais $\bar{n}$ = 6) ayant une teneur en matières sèches de 22,5% en poids, 35,7 g de la solution aqueuse de nonylphénoxypoly(éthylèneoxy)éthanol (II) décrite à l'exemple 9, et 10,0 g d'alcool isopropylique. On y ajoute ensuite,

sous agitation, 650,0 g d'acrylate de 2-éthylhexyle, 300,0 g d'acrylate de méthyle et 50,0 g de méthacrylate d'acétoacétoxyéthyle; il en résulte la formation d'une préémulsion.

On introduit sous agitation, dans un réacteur contenant 330,0 g d'eau déminéralisée chauffée au préalable à 80°C, 3,0 g de persulfate d'ammonium. On introduit ensuite dans le mélange et sur une période de 4 heures, la préémulsion préparée ci-dessus.

On maintient le réacteur à 80°C pendant 2 heures pour achever la réaction et on le laisse ensuite refroidir jusqu'à la température ambiante. On y ajoute ensuite lentement 5,5 g d'une solution aqueuse d'ammoniaque à 25% en poids. Les caractéristiques de ce latex sont fournies au tableau II.

On prépare également, à titre de comparaison, des dispersions aqueuses de deux polymères vinyliques, numérotées C2 et C3, qui ne sont pas conformes à l'invention.

Exemple C2 (comparatif).

Le mode opératoire est identique à celui décrit à l'exemple 12, mais l'on remplace les matières de départ de la préémulsion par 575,0 g de méthacrylate de méthyle, 410,0 g d'acrylate de 2-éthylhexyle, 15,0 g d'acide acrylique et 28,6 g de ta solution aqueuse de nonylphénylpoly(oxyéthylène)sulfate (I) ayant une teneur en matières sèches de 34%, comme décrit à l'exemple 9. Le latex ainsi obtenu possède un taux de monomères libres inférieur à 0,01% en poids, un niveau de coagulum à 50 micromètres inférieur à 50 mg/l et une température minimale de formation de film d'environ 17°C. Ce polymère vinylique ne possède pas de groupes fonctionnels ester d'acétoacétoxyalkyle. Les autres caractéristiques de ce latex sont fournies au tableau II.

Exemple C3 (comparatif).

Le mode opératoire est identique à celui décrit à l'exemple 12, mais l'on remplace les matières de départ de la préémulsion par 550,0 g de méthacrylate de méthyle, 385,0 g d'acrylate de 2-éthylhexyle, 50,0 g de diacétoneacrylamide et 15,0 g d'acide acrylique. Le latex ainsi obtenu possède un taux de monomères libres inférieur à 0,01% en poids et une température minimale de formation de film d'environ 18°C. Ce polymère vinylique ne possède pas de groupes fonctionnels ester d'acétoacétoxyalkyle, mais porte des groupes carbonyle pendant le long de la chaîne dérivés du diacétoneacrylamide. Les autres caractéristiques de ce latex sont fournies au tableau II.

Le tableau II montre la teneur en matières sèches (en % en poids), la quantité de monomère méthacrylate d'acétoacétoxyéthyle (AAEM) exprimée en % en poids du polymère vinylique, la viscosité (η), la valeur du pH et la dimension moyenne des particules relevés pour les dispersions de latex des polymères vinyliques préparés aux exemples 9 à 16 et aux exemples comparatifs C2 et C3, ainsi que la température de ramollissement et la température de transition vitreuse (Tg) relevées avec les films de polymère préparés avec celles-ci. Ces films (d'épaisseur 100 micromètres) sont obtenus par coulée de la dispersion de latex sur des plaques de verre, séchage à 80°C pendant 3 heures et repos de 2 jours à la température ambiante.

TABLEAU II.

| Caractéristiques des polymères vinyliques. | | | | | | | |
|---|---|---|---|---|---|---|---|
| Exemple | Dispersions aqueuses des latex de polymères vinyliques | | | | | Films secs | |
| | Teneur en matières sèches (%) | Teneur en AAEM (%) | η(25°C) (mPa.s) | pH | Dimension moyenne des particules (nm) | Température de ramollissement (°C) | Tg (°C) |
| 9 | 49 | 5 | 315 | 8,5 | 134 | 120 | 17 |
| 10 | 49 | 5 | 408 | 8,7 | 128 | 75 | 16 |
| 11 | 20 | 5 | 80 | 8,2 | 126 | 105 | 30 |
| 12 | 49 | 0,1 | 600 | 8,6 | 129 | 120 | 26 |
| 13 | 49 | 1,0 | 450 | 8,6 | 137 | 125 | 19 |
| 14 | 49 | 10,0 | 250 | 7,6 | 122 | 130 | 23 |
| 15 | 47 | 50,0 | 150 | 6,9 | 126 | 130 | 28 |
| 16 | 50 | 5,0 | 200 | 8,4 | 208 | -(2) | -(2) |
| C2(1) | 48 | 0 | 380 | 7,2 | 125 | 135 | 15 |

(1) à titre comparatif

(2) valeur non relevée

TABLEAU II. (suite)

| Caractéristiques des polymères vinyliques. | | | | | | | |
|---|---|---|---|---|---|---|---|
| Exemple | Dispersions aqueuses des latex de polymères vinyliques | | | | | Films secs | |
| | Teneur en matières sèches (%) | Teneur en AAEM (%) | η(25°C) (mPa.s) | pH | Dimension moyenne des particules (nm) | Température de ramollissement (°C) | Tg (°C) |
| C3(1) | 49 | 0 | 460 | 8,5 | 145 | 155 | 23 |

(1) à titre comparatif

Exemples 17 à 36. Compositions aqueuses de résines conformes à l'invention.

On prépare une série de compositions aqueuses de résines (exemples 17 à 34) selon l'invention en mélangeant sous agitation une dispersion aqueuse de polyuréthannes préparée aux exemples 1 à 8 avec une dispersion aqueuse de polymère vinylique préparée aux exemples 9 à 16; on poursuit le mélange jusqu'à ce que la dispersion devienne homogène. Les différentes compositions aqueuses de résines ainsi obtenues sont utilisées pour préparer des films coulés d'une épaisseur de 100 micromètres pour leur évaluation ultérieure.

On prépare également deux autres compositions aqueuses de résines (exemples 35 et 36) en polymérisant les monomères du polymère vinylique en présence d'une dispersion aqueuse de polyuréthannes (exemple 35) ou en effectuant l'extension des chaînes du prépolymère de polyuréthanne avec un agent d'extension de chaîne en présence d'une dispersion aqueuse de polymère vinylique (exemple 36).

Exemple 35.

On suit le mode opératoire de l'exemple 9, mais dans le réacteur, le mélange auquel ta la préémulsion est ajoutée contient en outre 2860,0 g de dispersion aqueuse de polyuréthannes préparée à l'exemple 1.

Exemple 36.

On suit le mode opératoire de l'exemple 1, mais le mélange introduit dans la cuve à dispersion et auquel te prépolymère de polyuréthanne est ajouté, contient en outre 1373,0 g du latex acrylique préparé à l'exemple 9.

On prépare également de la même manière, à titre de comparaison, cinq compositions, numérotées C4 à C8, qui ne sont pas conformes à l'invention.

Les différentes compositions des exemples 17 à 34 et $C_4$ à $C_8$ sont décrites au tableau III, dans lequel on donne, à la première colonne, le numéro de l'exemple, aux deuxième et troisième colonnes, respectivement, la nature et la quantité (en grammes) de la dispersion aqueuse de polyuréthannes (PU) utilisée dans la composition, aux quatrième et cinquième colonnes, respectivement, la nature et la quantité (en grammes) de la dispersion aqueuse de polymère vinylique (PV) utilisée dans la composition et à la sixième colonne, le rapport pondéral polyuréthanne (PU) : polymère vinylique (PV).

Dans les compositions comparatives C7 et C8, on utilise un agent de réticulation du commerce pour les polyuréthannes, à la place du polymère vinylique.

Les compositions aqueuses préparées aux exemples 17 à 31 sont utilisées avantageusement comme compositions pour revêtement protecteur, tandis que les compositions aqueuses des exemples 32 à 34 sont destinées spécialement pour être utilisées en tant qu'adhésifs.

TABLEAU III.

| Exemples de compositions aqueuses de résines. | | | | | |
|---|---|---|---|---|---|
| Exemple | Dispersion de polyuréthannes (PU) de l'exemple | Quantité (g) | Dispersion de polymère vinylique (PV) de l'exemple | Quantité (g) | rapport en masse PU: PV |
| 17 | 1 | 58 | 15 | 42 | 1:1 |
| 18 | 1 | 58 | 14 | 42 | 1:1 |
| 19 | 1 | 58 | 10 | 42 | 1:1 |
| 20 | 1 | 58 | 13 | 42 | 1:1 |

TABLEAU III. (suite)

| Exemples de compositions aqueuses de résines. | | | | | |
|---|---|---|---|---|---|
| Exemple | Dispersion de polyuréthannes (PU) de l'exemple | Quantité (g) | Dispersion de polymère vinylique (PV) de l'exemple | Quantité (g) | rapport en masse PU: PV |
| 21 | 1 | 58 | 12 | 42 | 1:1 |
| 22 | 1 | 58 | 9 | 42 | 1:1 |
| 23 | 1 | 41 | 9 | 59 | 1:2 |
| 24 | 1 | 26 | 9 | 74 | 1:4 |
| 25 | 2 | 62 | 9 | 38 | 1:1 |
| 26 | 3 | 68 | 9 | 32 | 1:1 |
| 27 | 4 | 58 | 9 | 42 | 1:1 |
| 28 | 1 | 50 | 11 | 87,5 | 1:1 |
| 29 | 3 | 68 | 14 | 32 | 1:1 |
| 30 | 3 | 68 | 15 | 32 | 1:1 |
| 31 | 8 | 58 | 9 | 42 | 1:1 |
| 32 | 5 | 68 | 16 | 32 | 1:1 |
| 33 | 6 | 53 | 16 | 47 | 1:1 |
| 34 | 7 | 65 | 16 | 35 | 1:1 |
| C4(1) | 1 | 58 | C2 | 42 | 1:1 |
| C5(1) | 1 | 58 | C3 | 42 | 1:1 |
| C6(1) | C1 | 58 | 9 | 42 | 1:1 |
| C7(1) | 1 | 99 | XAMA-2 (2) | 1 | 35:1 |
| C8(1) | 5 | 95 | EPIKOTE 828 (3) | 5 | 87:13 |

(1) à titre comparatif.

(2) XAMA-2 de la société FLAVO CHEMIE (triméthylolpropane-tris[β-(N-aziridinyl)propionate]); (agent de réticulation de type polyaziridine)

(3) émulsion aqueuse (65% en poids) à base d'EPIKOTE 828 de la société SHELL (un produit de réaction de l'épichlorhydrine et du bisphénol A; agent de réticulation de type polyépoxy)

Le tableau IV montre la température de ramollissement, la température de transition vitreuse (Tg), les résistances à l'eau et à l'éthanol et la transparence mesurées sur des revêtements préparés avec les compositions des exemples 17 à 31 et 35 et 36 (conformes à l'invention) et avec les compositions des exemples comparatifs C4 à C6.

Tous les revêtements des tableaux IV et V sont obtenus par coulage des compositions aqueuses de résines (50 ou 100 micromètres d'épaisseur) sur plaques de verre et repos pendant 3 jours à la température ambiante. On n'améliore pas les propriétés de ces films en les chauffant à 80°C, ce qui montre qu'une réticulation complète a été obtenue à la température ambiante.

TABLEAU IV.

| Caractéristiques des revêtements. | | | | | |
|---|---|---|---|---|---|
| Composition de l'exemple | Température de ramollissement (°C) | Tg (°C) | Résistance à l'eau | Résistance à l'éthanol | Transparence |
| 17 | 200 | -1 | 5 | 5 | 2 |
| 18 | 190 | 6 | 5 | 5 | 2 |
| 19 | 210 | -2 | 5 | 5 | 2-3 |
| 20 | 120 | indéfini | 5 | 5 | 3-4 |
| 21 | 120 | indéfini | 4 | 4 | 3-4 |
| 22 | 205 | 2 | 5 | 5 | 2-3 |
| 23 | 195 | 10 | 5 | 5 | 2 |
| 24 | 200 | 12 | 5 | 5 | 2 |
| 25 | 200 | -9 | 5 | 5 | 1 |
| 26 | 195 | 8 | 5 | 5 | 1 |

TABLEAU IV. (suite)

| Caractéristiques des revêtements. | | | | | |
|---|---|---|---|---|---|
| Composition de l'exemple | Température de ramollissement (°C) | Tg (°C) | Résistance à l'eau | Résistance à l'éthanol | Transparence |
| 27 | 205 | 3 | 5 | 5 | 2 |
| 28 | 200 | 10 | 5 | 5 | 1-2 |
| 29 | 195 | 3 | 5 | 5 | 2 |
| 30 | 200 | -1 | 5 | 5 | 2 |
| 31 | 230 | -24 | 5 | 5 | 1-2 |
| 35 | 210 | 4 | 5 | 5 | 2-3 |
| 36 | 205 | 2 | 5 | 5 | 2-3 |
| C4 (1) | 130 | -10/14 | 4 | 3 | 4 |
| C5 (1) | 140 | -10/14 | 4 | 3 | 1-2 |
| C6 (1) | 120 | -42/15 | 2 | 1 | 4 |

(1) à titre comparatif

Le tableau V montre les résultats de l'essai de frottement à la méthyéthylcétone (MEK) pour des films (50 micromètres d'épaisseur) préparés avec les compositions des exemples 17 à 31, 35 et 36 et avec les compositions des exemples comparatifs C4 à C7. On donne également dans le tableau V une comparaison directe dans ce test entre les revêtements obtenus avec les compositions complètes et les revêtements obtenus avec chacune des dispersions, prises individuellement, à partir desquelles ces compositions sont préparées. Donc, dans le tableau V, on donne à la première colonne, l'exemple de la composition testée, à la deuxième colonne, le résultat de l'essai de frottement à la méthyléthylcétone (nombre de frottements) pour la dispersion de polyuréthannes (PU) respective, à la troisième colonne, le résultat de l'essai de frottement à la méthyléthylcétone pour la dispersion de polymère vinylique (PV) respective et à la quatrième colonne, le résultat de l'essai de frottement à la méthyléthylcétone pour la composition complète.

TABLEAU V.

| Composition de l'exemple | Résistance au frottement à la méthyléthylcétone des revêtements préparés avec: | | |
|---|---|---|---|
| | Dispersion de PU | Dispersion de PV | Composition complète |
| 17 | 15 | 25 | 90 |
| 18 | 15 | 15 | 80 |
| 19 | 15 | 5 | 75 |
| 20 | 15 | 10 | 45 |
| 21 | 15 | 10 | 40 |
| 22 | 15 | 10 | 75 |
| 23 | 15 | 10 | 60 |
| 24 | 15 | 10 | 70 |
| 25 | 10 | 10 | 55 |
| 26 | 10 | 10 | 65 |
| 27 | 15 | 10 | 65 |
| 28 | 15 | 5 | 110 |
| 29 | 10 | 15 | 55 |
| 30 | 10 | 25 | 60 |
| 31 | 30 | 10 | 100 |
| 35 | - | - | 75 |
| 36 | - | - | 75 |
| C4(1) | 15 | 5 | 10 |
| C5(1) | 15 | 5 | 20 |
| C6(1) | 5 | 10 | 5 |
| C7(1) | 15 | - | 55 |

(1) à titre comparatif

Au tableau VI, on montre les résultats des mesures du taux de gel (exprimés en %) dans la méthyléthylcétone (MEK) et dans le N,N-diméthylformamide (DMF) pour les revêtements réticulés obtenus à partir des compositions aqueuses de résine des exemples 17 à 31, 35 et 36 et des exemples comparatifs C4 à C7. On donne également dans ce tableau une comparaison directe dans ce test entre les revêtements obtenus avec les compositions complètes et les revêtements obtenus avec chacune des dispersions, prises individuellement, à partir desquelles ces compositions sont préparées (voir tableau III). Donc, dans le tableau VI, on donne à la première colonne, l'exemple de la composition testée, à la deuxième colonne, le taux de gel (dans la MEK) pour la dispersion de polyuréthannes (PU) respective, à la troisième colonne, le taux de gel (MEK) pour la dispersion de polymère vinylique (PV) respective, à la quatrième colonne, le taux de gel (dans la MEK) pour la composition complète, à la cinquième colonne, le taux de gel (dans le DMF) pour la dispersion de polyuréthannes (PU) respective, à la sixième colonne, le taux de gel (dans le DMF) pour la dispersion de polymère vinylique (PV) respective et à la septième colonne, le taux de gel (dans le DMF) pour la composition complète.

## TABLEAU VI.

Taux de gel (en %) des compositions de résines

| Composition de l'exemple | MEK Dispersion PU | MEK Dispersion PV | MEK Composition complète | DMF Dispersion PU | DMF Dispersion PV | DMF Composition complète |
|---|---|---|---|---|---|---|
| 17 | 55 | 78 | 89 | 0 | 61 | 85 |
| 18 | 55 | 54 | 84 | 0 | 56 | 73 |
| 19 | 55 | 0 | 68 | 0 | 0 | 48 |
| 20 | 55 | 44 | 74 | 0 | 26 | 45 |
| 21 | 55 | 29 | 54 | 0 | 6 | 36 |
| 22 | 55 | 50 | 77 | 0 | 44 | 57 |
| 23 | 55 | 50 | 74 | 0 | 44 | 53 |
| 24 | 55 | 50 | 71 | 0 | 44 | 50 |
| 25 | 0 | 50 | 65 | 11 | 44 | 60 |
| 26 | 56 | 50 | 72 | 53 | 44 | 71 |
| 27 | 25 | 50 | 66 | 10 | 44 | 51 |
| 28 | 55 | 0 | 71 | 0 | 0 | 58 |
| 29 | 56 | 54 | 60 | 53 | 56 | 64 |
| 30 | 56 | 78 | 70 | 53 | 61 | 66 |
| 31 | 70 | 50 | 91 | 31 | 44 | 36 |
| 35 | - | - | 80 | - | - | 61 |
| 36 | - | - | 71 | - | - | 58 |
| C4(1) | 55 | 1 | 16 | 0 | 0 | 2 |
| C5(1) | 55 | 0 | 28 | 0 | 0 | 0 |
| C6(1) | 0 | 50 | 31 | 0 | 44 | 28 |
| C7(1) | 55 | - | 82 | 0 | - | 69 |

(1) à titre comparatif

Conclusions.

Aux tableaux IV à VI, on voit que les revêtements préparés à partir des compositions aqueuses de résines conformes à l'invention ont une résistance aux solvants et à l'eau nettement améliorées ainsi qu'une excellente transparence par rapport aux revêtements préparés avec les compositions comparatives contenant des polymères vinyliques (ou acryliques) n'ayant pas de groupes ester d'acétoacétoxyalkyle (exemples comparatifs C4 et C5) ou contenant un polyuréthanne non fonctionnalisé (exemple comparatif C6).

Dans les compositions des exemples 17 à 21, le polyuréthanne est identique et le rapport PU:PV reste constant (tableau III), mais la teneur en méthacrylate d'acétoacétoxyéthyle (AAEM) du polymère vinylique décroît de 50% en poids à 0,1% en poids (voir tableau II). On peut constater que la quantité d'AAEM peut varier dans de larges limites sans affecter de manière significative les propriétés des revêtements, c'est-à-dire, la température de ramollissement, la résistance à l'eau et à l'éthanol, la résistance au frottement à la méthyléthylcétone (MEK), la transparence ou le taux de gel.

A l'exemple 21, dans lequel la proportion d'AAEM est particulièrement faible (0,1% en poids), les propriétés du revêtement ne sont pas aussi avantageuses et approchent la limite acceptable. Néanmoins, le revêtement préparé avec la composition de l'exemple 21, qui n'est pas une composition préférée selon l'invention, présente encore des propriétés intéressantes telles que la résistance au frottement à la méthyléthylcétone (MEK) et le taux de gel, par rapport aux revêtements obtenus à partir des compositions comparatives dans lesquelles le polymère vinylique ne contient pas de groupes ester d'acétoacétoxyalkyle (exemples C4 et C5).

Aux exemples 22 à 24, les constituants polymères des compositions sont les mêmes, mais leurs proportions sont différentes. De ces exemples, on peut reconnaître que le rapport en poids entre le polyuréthanne et le polymère vinylique peut varier dans une large mesure sans affecter les propriétés des revêtements.

Les exemples 25 à 31 illustrent des compositions aqueuses de résines conformes à l'invention préparées à partir de diverses dispersions acryliques et dispersions de polyuréthannes et qui diffèrent entre elles par la nature et les proportions de leurs constituants. Les exemples 35 et 36 illustrent des compositions aqueuses de résines préparées en polymérisant les monomères du polymère vinylique en présence d'une dispersion aqueuse de polyuréthannes ou en effectuant l'extension des chaînes du prépolymère de polyuréthanne avec un agent d'extension de chaîne en présence d'une dispersion aqueuse de polymère vinylique. Les revêtements préparés à partir de ces compositions présentent tous des propriétés supérieures à celles que l'on observe pour les revêtements préparés à partir des compositions des exemples comparatifs C4 à C6.

De plus, il est à noter que seuls les revêtements préparés avec les compositions conformes à l'invention présentent une seule température de transition vitreuse (Tg, tableau IV), tandis que les revêtements préparés avec les compositions des exemples comparatifs C4 à C6 présentent deux températures de transition vitreuse (Tg, tableau IV).

En ce qui concerne ces deux températures de transition vitreuse, il est intéressant de signaler le fait que la valeur inférieure est la valeur de la Tg du polyuréthanne de l'exemple 1 (ou C1) (voir tableau I), tandis que les valeurs supérieures sont similaires aux Tg des polymères vinyliques des exemples C2, C3 ou 9 (voir tableau II).

Il est clair qu'il se produit une réaction d'autoréticulation dans le cas des compositions conformes à l'invention, mais que celle-ci est inexistante dans le cas des compositions comparatives. Ce fait est confirmé par les valeurs du taux de gel (qui est une indication du niveau de réticulation entre les deux composants de la composition) mesurées avec ces compositions (tableau VI). Les exemples comparatifs démontrent clairement qu'il ne se produit pas de réticulation lorsque l'on utilise un polymère vinylique n'ayant pas de groupes ester d'acétoacétoxyalkyle (exemples C4 et C5) ou un polyuréthanne n'ayant pas de groupes anioniques (exemple C6). Dans ce contexte, les valeurs élevées des taux de gel mesurés dans le DMF pour les compositions des exemples 19 et 28 (tableau VI) sont extrêmement intéressantes par rapport aux taux de gel inexistants de la dispersion de polyuréthannes (PU) et de la dispersion de polymère vinylique (PV) à partir desquelles ces compositions sont préparées.

D'autre part, les valeurs du taux de gel des revêtements obtenus avec les compositions conformes à la présente invention sont du même ordre de grandeur que les valeurs obtenues avec un revêtement préparé à partir de la composition de l'exemple comparatif C7, dans laquelle un agent de réticulation externe de type polyaziridine est présent (voir tableau VI).

Les exemples 32 à 34 illustrent la préparation d'adhésifs de laminage à partir de compositions aqueuses conformes à l'invention

Le tableau VII montre le temps de réticulation mesuré pour des revêtements adhésifs (épaisseur de 50 micromètres) et la résistance au pelage mesurée pour des revêtements adhésifs (épaisseur de 5 micromètres) préparés avec les compositions des exemples 30 à 32, comparés avec les valeurs obtenues pour les revêtements adhésifs préparés à partir de compositions ne renfermant qu'un seul des composants, à savoir la dispersion aqueuse de polyuréthannes de l'exemple 5 et la dispersion aqueuse de polymère vinylique de l'exemple 16. On indique aussi, à titre de comparaison, les valeurs obtenues avec un revêtement adhésif préparé à partir de la composition comparative C8 qui contient un agent de réticulation externe du commerce (voir tableau III). Cette composition C8 a une stabilité au stockage de moins d'un jour à la température ambiante.

TABLEAU VII.

| Temps de réticulation et résistance au pelage des revêtements adhésifs. | | | |
|---|---|---|---|
| Composition de l'exemple | Temps de réticulation (DMF) (jours) | Résistance au pelage (PET/PE) (2) (g/cm) | Résistance au pelage (PET/Alu) (3) (g/cm) |
| 32 | 10 | 110 | 150 |
| 33 | 14 | 110 | 210 |
| 34 | 14 | 110 | 130 |
| 5 (1) | >30 | 75 | 80 |
| 16 (1) | >30 | 60 | 50 |
| C8 (1) | 10 | 120 | 140 |

(1) à titre comparatif
(2) laminé de téréphtalate de polyéthylène - polyéthylène
(3) laminé de téréphtalate de polyéthylène - feuille d'aluminium

Le tableau VII montre que les adhésifs de laminage préparés avec les compositions conformes à ta présente invention ont des propriétés supérieures par rapport à celles des dispersions des exemples 5 et 16 contenant seulement un polyuréthanne ou un polymère vinylique et à partir desquelles on prépare la composition de l'exemple 32 (voir tableau III).

Finalement, en ce qui concerne la stabilité au stockage, il est intéressant de remarquer que les compositions aqueuses de résines conformes à la présente invention n'ont pas montré de sédimentation, ni de séparation de phases, ni un quelconque autre signe d'instabilité pendant plus de 6 mois de stockage à la température ambiante.

**Revendications**

**1.** Composition aqueuse de résines autoréticulables comprenant une dispersion aqueuse contenant au moins un polyuréthanne et au moins un polymère vinylique caractérisée en ce que ledit au moins un polyuréthanne possède comme seuls groupes fonctionnels pendant le long de la chaîne, des groupes anioniques et en ce que ledit au moins un polymère vinylique possède des groupes fonctionnels ester d'acétoacétoxyalkyle pendant le long de la chaîne.

**2.** Composition selon la revendication 1, caractérisée en ce que ledit au moins un polyuréthanne possède des groupes fonctionnels anioniques pendant le long de la chaîne, choisis dans le groupe consistant en les groupes -COOM et $-SO_3M$, de préférence le groupe -COOM, dans lesquels M représente un métal alcalin ou un groupe ammonium, tétraalkylammonium ou tétraalkylphosphonium.

**3.** Composition selon l'une quelconque des revendications 1 et 2, caractérisée en ce que le rapport en poids entre ledit au moins un polyuréthanne et ledit au moins un polymère vinylique est compris dans l'intervalle de 1:10 à 10:1, de préférence de 1:4 à 4:1.

**4.** Composition selon l'une quelconque des revendications 1 à 3, caractérisée en ce que ledit au moins un polyuréthanne, possédant des groupes fonctionnels anioniques pendant le long de la chaîne, présent dans la composition est le produit de réaction de :

(1) un prépolymère de polyuréthanne terminé par des groupes isocyanate formé par la réaction d'au moins

(a) un excès d'un polyisocyanate organique;
(b) un composé organique contenant au moins deux groupes réagissant avec le groupe isocyanate; et
(c) un composé réagissant avec le groupe isocyanate contenant des groupes fonctionnels anioniques (ou des groupes acide qui peuvent ensuite être convertis en de tels groupes anioniques); et

(2) un agent d'extension de chaîne contenant des atomes d'hydrogène actifs.

**5.** Composition selon la revendication 4, caractérisée en ce que le polyisocyanate organique est un polyisocyanate aliphatique, cycloaliphatique ou aromatique.

6. Composition selon la revendication 4, caractérisée en ce que le composé organique contenant au moins deux groupes réagissant avec le groupe isocyanate est choisi dans le groupe consistant en les polyesters polyols, les polyéthers polyols, les polycarbonates polyols, les polyacétals polyols, les polyesteramides polyols et les polythioéthers polyols.

7. Composition selon la revendication 4, caractérisée en ce que le composé réagissant avec le groupe isocyanate contenant des groupes fonctionnels anioniques (ou des groupes acide qui peuvent ensuite être convertis en de tels groupes anioniques) est (a) un acide hydroxycarboxylique représenté par la formule générale $(HO)_xR(COOH)_y$, dans laquelle R représente un radical hydrocarboné à chaîne droite ou ramifiée possédant de 1 à 12 atomes de carbone, et x et y sont des nombres entiers de 1 à 3 ou (b) un polyester sulfoné obtenu par la réaction d'un acide dicarboxylique sulfoné avec un ou plusieurs alcools polyhydriques, ou par la réaction d'un diol sulfoné avec un ou plusieurs acides polycarboxyliques.

8. Composition selon la revendication 4, caractérisée en ce que l'agent d'extension de chaîne contenant des atomes d'hydrogène actifs est l'eau ou une polyamine primaire ou secondaire, aliphatique, alicyclique, aromatique ou hétérocyclique, contenant jusqu'à 80, de préférence jusqu'à 12 atomes de carbone.

9. Composition selon l'une quelconque des revendications 1 à 8, caractérisée en ce que la quantité de groupes anioniques présents dans le polyuréthanne représente de 0,01 à 2 milliéquivalents par gramme de polyuréthanne.

10. Composition selon l'une quelconque des revendications 1 à 8, caractérisée en ce que ledit au moins un polymère vinylique possédant des groupes fonctionnels ester d'acétoacétoxyalkyle pendant le long de la chaîne est le produit formé par polymérisation radicalaire d'au moins un monomère monoéthyléniquement insaturé contenant un groupe ester d'acétoacétoxyalkyle avec au moins un autre monomère éthyléniquement insaturé.

11. Composition selon la revendication 10, caractérisée en ce que le monomère monoéthyléniquement insaturé contenant un groupe ester d'acétoacétoxyalkyle est un composé de formule

$$R\text{-}O\text{-}CO\text{-}CH_2\text{-}CO\text{-}CH_3$$

dans laquelle R représente un groupe $CH_2{=}CR'\text{-}COO\text{-}R''\text{-}$ ou un groupe $CH_2{=}CR'\text{-}R''\text{-}$,

dans lequel R' est -H ou $-CH_3$ et
R'' est un radical alkylène possédant de 1 à 12 atomes de carbone.

12. Composition selon l'une quelconque des revendications 10 et 11, caractérisée en ce que le monomère monoéthyléniquement insaturé contenant un groupe ester d'acétoacétoxyalkyle est le méthacrylate d'acétoacétoxyéthyle.

13. Composition selon la revendication 10, caractérisée en ce que le monomère monoéthyléniquement insaturé contenant un groupe ester d'acétoacétoxyalkyle est présent en une quantité d'environ 1 à environ 80% en poids, de préférence d'environ 5 à environ 50% en poids du polymère vinylique.

14. Procédé de préparation d'une composition aqueuse de résines autoréticulables selon l'une quelconque des revendications 1 à 13, caractérisé en ce que l'on mélange d'une manière homogène et à la température ambiante une dispersion aqueuse d'au moins un polyuréthanne, possédant comme seuls groupes fonctionnels pendant le long de la chaîne des groupes anioniques, et une dispersion aqueuse d'au moins un polymère vinylique possédant des groupes fonctionnels ester d'acétoacétoxyalkyle pendant le long de la chaîne.

15. Procédé de préparation d'une composition aqueuse de résines autoréticulables selon l'une quelconque des revendications 1 à 13, caractérisé en ce que l'on effectue la polymérisation radicalaire des monomères du polymère vinylique, possédant des groupes fonctionnels ester d'acétoacétoxyalkyle pendant le long de la chaîne, en présence d'une dispersion aqueuse de polyuréthannes possédant des groupes fonctionnels anioniques pendant le long de la chaîne, ou en ce que l'on effectue l'extension des chaînes du prépolymère de polyuréthanne possédant des groupes fonctionnels anioniques pendant le long de la chaîne et terminé par des groupes isocyanate, au moyen d'un agent d'extension de chaîne contenant des atomes d'hydrogène actifs, et en présence d'une dispersion aqueuse d'un polymère vinylique possédant des groupes fonctionnels ester d'acétoacétoxyalkyle pendant le long

de la chaîne.

16. Vernis et revêtements adhésifs ou protecteurs obtenus avec une composition aqueuse selon l'une quelconque des revendications 1 à 13.

**Patentansprüche**

1. Wäßrige Zusammensetzung von selbstvernetzbaren Harzen, die eine wäßrige Dispersion umfassen, die wenigstens ein Polyurethan und wenigstens ein Vinylpolymer enthält. dadurch gekennzeichnet. daß das wenigstens eine Polyurethan über die Länge der Kette als alleinige funktionelle Gruppen anionische Gruppen besitzt. und dadurch, daß das wenigstens eine Vinylpolymer über die Länge der Kette funktionelle Acetoacetoxyalkylestergruppen besitzt.

2. Zusammensetzung gemäß Anspruch 1, dadurch gekennzeichnet, daß das wenigstens eine Polyurethan über die Länge der Kette anionische funktionelle Gruppen besitzt, die aus der Gruppe ausgewählt sind, die aus den Gruppen -COOM und -$SO_3$M, vorzugsweise der Gruppe -COOM. in denen M ein Alkalimetall oder eine Ammonium-, Tetraalkylammonium- oder Tetraalkylphosphoniumgruppe darstellt, besteht.

3. Zusammensetzung gemäß einem der Ansprüche 1 und 2, dadurch gekennzeichnet. daß das Gewichtsverhältnis zwischen dem wenigstens einen Polyurethan und dem wenigstens einen Vinylpolymer in dem Intervall von 1:10 bis 10:1, vorzugsweise von 1:4 bis 4:1 liegt.

4. Zusammensetzung gemäß einem der Ansprüche 1 bis 3, dadurch gekennzeichnet, daß das in der Zusammensetzung vorhandene wenigstens eine Polyurethan, das über die Länge der Kette anionische funktionelle Gruppen besitzt. das Reaktionsprodukt ist von:

   (1) einem Polyurethanprepolymer, das mit Isocyanatgruppen endet, das gebildet wird durch die Reaktion von wenigstens

      (a) einem Überschuß eines organischen Polyisocyanats:
      (b) einer organischen Verbindung, die wenigstens zwei Gruppen enthält, die mit der Isocyanatgruppe reagieren; und
      (c) einer mit der Isocyanatgruppe reagierenden Verbindung, die anionische funktionelle Gruppen (oder Säuregruppen, die anschließend in solche anionische Gruppen umgewandelt werden können) enthält; und

   (2) einem Kettenverlängerungsmittel. das aktive Wasserstoffatome enthält.

5. Zusammensetzung gemäß Anspruch 4, dadurch gekennzeichnet, daß das organische Polyisocyanat ein aliphatisches, cycloaliphatisches oder aromatisches Polyisocyanat ist.

6. Zusammensetzung gemäß Anspruch 4, dadurch gekennzeichnet, daß die organische Verbindung, die wenigstens zwei Gruppen enthält. die mit der Isocyanatgruppe reagieren, aus der Gruppe ausgewählt ist, die aus den Polyol-Polyestern. den Polyol-Polyethern, den Polyol-Polycarbonaten. den Polyol-Polyacetalen, den Polyol-Polyesteramiden und den Polyol-Polythioethern besteht.

7. Zusammensetzung gemäß Anspruch 4, dadurch gekennzeichnet, daß die mit der Isocyanatgruppe reagierende Verbindung, die anionische funktionelle Gruppen (oder Säuregruppen, die anschließend in solche anionische Gruppen umgewandelt werden können) enthält, (a) eine Hydroxycarbonsäure ist, die durch die allgemeine Formel $(HO)_xR(COOH)_y$ dargestellt wird. in der R einen Kohlenwasserstoffrest mit gerader oder verzweigter Kette, der 1 bis 12 Kohlenstoffatome besitzt, darstellt und x und y ganze Zahlen von 1 bis 3 sind. oder (b) ein sulfonierter Polyester ist, der durch die Reaktion einer sulfonierten Dicarbonsäure mit einem oder mehreren mehrwertigen Alkoholen oder durch Reaktion eines sulfonierten Diols mit einer oder mehreren Polycarbonsäuren erhalten wird.

8. Zusammensetzung gemäß Anspruch 4, dadurch gekennzeichnet. daß das Kettenverlängerungsmittel, das aktive Wasserstoffatome enthält. Wasser oder ein primäres oder sekundäres, aliphatisches. alicyclisches, aromatisches oder heterocyclisches Polyamin ist, das bis zu 80, vorzugsweise bis zu 12 Kohlenstoffatome enthält.

9. Zusammensetzung gemäß einem der Ansprüche 1 bis 8, dadurch gekennzeichnet, daß die Menge an anionischen Gruppen, die in dem Polyurethan vorhanden sind, 0.01 bis 2 Milliäquivalente pro Gramm Polyurethan darstellt.

10. Zusammensetzung gemäß einem der Ansprüche 1 bis 8, dadurch gekennzeichnet, daß das wenigstens eine Vinylpolymer, das über die Länge der Kette funktionelle Acetoacetoxyalkylestergruppen besitzt, das Produkt ist, das durch radikalische Polymerisation von wenigstens einem monoethylenisch ungesättigten Monomer, das eine Acetoacetoxyalkylestergruppe enthält. mit wenigstens einem anderen ethylenisch ungesättigten Monomer gebildet wird.

11. Zusammensetzung gemäß Anspruch 10, dadurch gekennzeichnet, daß das monoethylenisch ungesättigte Monomer, das eine Acetoacetoxyalkylestergruppe enthält. eine Verbindung der Formel

$$R\text{-}O\text{-}CO\text{-}CH_2\text{-}CO\text{-}CH_3$$

ist, in der R eine Gruppe $CH_2{=}CR'\text{-}COO\text{-}R''\text{-}$ oder eine Gruppe $CH_2{=}CR'\text{-}R''\text{-}$

darstellt,

in der R' -H oder $-CH_3$ ist und R" ein Alkylenrest ist, der 1 bis 12 Kohlenstoffatome besitzt.

12. Zusammensetzung gemäß einem der Ansprüche 10 und 11, dadurch gekennzeichnet. daß das monoethylenisch ungesättigte Monomer, das eine Acetoacetoxyalkylestergruppe enthält, Acetoacetoxyethylmethacrylat ist.

13. Zusammensetzung gemäß Anspruch 10, dadurch gekennzeichnet, daß das monoethylenisch ungesättigte Monomer, das eine Acetoacetoxyalkylestergruppe enthält. in einer Menge von etwa 1 bis etwa 80 Gew.-%, vorzugsweise von etwa 5 bis etwa 50 Gew.-% des Vinylpolymers vorhanden ist.

14. Verfahren zur Herstellung einer wäßrigen Zusammensetzung von selbstvernetzbaren Harzen gemäß einem der Ansprüche 1 bis 13, dadurch gekennzeichnet, daß man eine wäßrige Dispersion von wenigstens einem Polyurethan, das über die Länge der Kette als alleinige funktionelle Gruppen anionische Gruppen besitzt, und eine wäßrige Dispersion von wenigstens einem Vinylpolymer, das über die Länge der Kette funktionelle Acetoacetoxyalkylestergruppen besitzt, auf homogene Weise und bei Raumtemperatur mischt.

15. Verfahren zur Herstellung einer wäßrigen Zusammensetzung von selbstvernetzbaren Harzen gemäß einem der Ansprüche 1 bis 13, dadurch gekennzeichnet, daß man die radikalische Polymerisation der Monomere des Vinylpolymers, das über die Länge der Kette funktionelle Acetoacetoxyalkylestergruppen besitzt, in Gegenwart einer wäßrigen Dispersion von Polyurethanen, die über die Länge der Kette anionische funktionelle Gruppen besitzen, ausführt, oder dadurch, daß man die Verlängerung der Ketten des Polyurethanprepolymers, das über die Länge der Kette anionische funktionelle Gruppen besitzt und mit Isocyanatgruppen endet, mittels eines Kettenverlängerungsmittels, das aktive Wasserstoffatome enthält. und in Gegenwart einer wäßrigen Dispersion eines Vinylpolymers, das über die Länge der Kette funktionelle Acetoacetoxyalkylestergruppen besitzt, ausführt.

16. Lacke und Haft- oder Schutzbeschichtungen, die mit einer wäßrigen Zusammensetzung gemäß einem der Ansprüche 1 bis 13 erhalten werden.

**Claims**

1. Aqueous selfcrosslinkable resins composition comprising an aqueous dispersion containing at least one polyurethane polymer and at least one vinyl polymer, characterised in that said at least one polyurethane polymer has anionic groups as sole chain-pendant functional groups and in that said at least one vinyl polymer has chain-pendant acetoacetoxyalkyl ester functional groups.

2. Composition according to claim 1, characterised in that said at least one polyurethane polymer has chain-pendant

anionic functional groups selected from the group consisting of the -COOM and $-SO_3M$ groups, preferably the -COOM group, wherein M represents an alkali metal or an ammonium, tetraalkylammonium or tetraalkylphosphonium group.

**3.** Composition according to anyone of claims 1 and 2, characterised in that the weight ratio of said at least one polyurethane polymer to said at least one vinyl polymer is within the range of from 1:10 to 10:1, preferably of from 1:4 to 4:1.

**4.** Composition according to anyone of claims 1 to 3, characterised in that said at least one polyurethane polymer having chain-pendant anionic functional groups present in the composition is the reaction product of:

(1) an isocyanate-terminated polyurethane prepolymer formed by reacting at least

a) an excess of an organic polyisocyanate;
b) an organic compound containing at least two isocyanate-reactive groups; and
c) an isocyanate-reactive compound containing anionic functional groups (or acid groups which may be subsequently converted to such anionic groups); and

(2) an active hydrogen-containing chain extender.

**5.** Composition according to claim 4, characterised in that the organic polyisocyanate is an aliphatic, cycloaliphatic or aromatic polyisocyanate.

**6.** Composition according to claim 4, characterised in that the organic compound containing at least two isocyanate-reactive groups is selected from the group consisting of polyester polyols, polyether polyols, polycarbonate polyols, polyacetal polyols, polyesteramide polyols and polythioether polyols.

**7.** Composition according to claim 4, characterised in that the isocyanate-reactive compound containing the functional anionic functional groups (or acid groups which may be subsequently converted to such anionic groups) is

(a) a hydroxycarboxylic acid represented by the general formula $(HO)_xR(COOH)_y$, wherein R represents a straight or branched chain hydrocarbon radical having 1 to 12 carbon atoms, and x and y are integers from 1 to 3, or
(b) a sulfonated polyester obtained by the reaction of a sulfonated dicarboxylic acid with one or more polyhydric alcohols, or by the reaction of a sulfonated diol with one or more polycarboxylic acids.

**8.** Composition according to claim 4, charactensed in that the active hydrogen-containing chain extender is water or an aliphatic, alicyclic, aromatic or heterocyclic primary or secondary polyamine having up to 80 carbon atoms, preferably up to 12 carbon atoms.

**9.** Composition according to anyone of claims 1 to 8, characterised in that the amount of anionic groups in the polyurethane polymer represents from 0.01 to 2 milliequivalents per gram of polyurethane polymer.

**10.** Composition according to anyone of claims 1 to 8, characterised in that said at least one vinyl polymer having chain-pendant acetoacetoxyalkyl ester functional groups is the product formed by the free-radical addition polymerization of at least one monoethylenically unsaturated monomer containing an acetoacetoxyalkyl ester group with at least one other ethylenically unsaturated monomer.

**11.** Composition according to claim 10, characterised in that the monoethylenically unsaturated monomer containing an acetoacetoxyalkyl ester group is a compound having the formula

$$R\text{-}O\text{-}CO\text{-}CH_2\text{-}CO\text{-}CH_3$$

wherein R represents a
$CH_2=CR'\text{-}COO\text{-}R''$- group or a $CH_2=CR'\text{-}R''$- group in which

R' is a hydrogen atom or a methyl radical and

R" is an alkylene radical having 1 to 12 carbon atoms.

**12.** Composition according to anyone of claims 10 and 11, characterised in that the monoethylenically unsaturated monomer containing an acetoacetoxyalkyl ester group is acetoacetoxyethyl methacrylate.

**13.** Composition according to claim 10, characterised in that the monoethylenically unsaturated monomer containing an acetoacetoxyalkyl ester group is present in an amount of from about 1 to about 80 %, preferably from about 5 to 50 % by weight of the vinyl polymer.

**14.** Process for the preparation of an aqueous selfcrosslinkable resins composition according to anyone of claims 1 to 13, characterised in that an aqueous dispersion of at least one polyurethane polymer having anionic groups as the sole chain-pendant functional groups, and an aqueous dispersion of at least one vinyl polymer having chain-pendant acetoacetoxyalkyl ester functional groups are homogenously mixed together at room temperature.

**15.** Process for the preparation of an aqueous selfcrosslinkable resins composition according to anyone of claims 1 to 13, characterised in that the monomers of the vinyl polymer having chain-pendant acetoacetoxyalkyl ester functional groups are subjected to radical polymerisation in the presence of an aqueous polyurethane polymer having chain-pendant anionic functional groups or in that an isocyanate-terminated polyurethane prepolymer having chain-pendant anionic functional groups is subjected to chain-extension with an active hydrogen-containing chain-extender in the presence of an aqueous dispersion of a vinyl polymer having chain-pendant acetoacetoxyalkyl ester functional groups.

**16.** Varnish and protective or adhesive coating obtained with an aqueous composition according to anyone of claims 1 to 13.